## Europäisches Patentamt
## European Patent Office
## Office européen des brevets

(19)

(11) Veröffentlichungsnummer: **0 004 970**
**B2**

(12)

# NEUE EUROPÄISCHE PATENTSCHRIFT

(45) Veröffentlichungstag der neuen Patentschrift:
**22.02.84**

(21) Anmeldenummer: **79101176.0**

(22) Anmeldetag: **18.04.79**

(51) Int. Cl.³: **B 60 J 7/18,** B 60 J 1/12,
B 60 H 1/26 // E05F 15/10,
G05D3/00, H02P8/00

---

(54) Anordnung zur Erzeugung von Stellbewegungen an Kraftfahrzeugbelüftungseinrichtungen.

---

(30) Priorität: **20.04.78 DE 2817297**

(43) Veröffentlichungstag der Anmeldung:
**31.10.79 Patentblatt 79/22**

(45) Bekanntmachung des Hinweises auf die Patenterteilung:
**20.05.81 Patentblatt 81/20**

(45) Bekanntmachung des Hinweises auf die Entscheidung
über den Einspruch:
**22.02.84 Patentblatt 84/8**

(84) Benannte Vertragsstaaten:
**FR GB IT NL SE**

(56) Entgegenhaltungen:
**DE - B - 1 680 228
FR - A - 1 067 314
GB - A - 783 757
US - A - 3 386 022**

(73) Patentinhaber: **Rockwell Golde GmbH, Hanauer
Landstrasse 338, D-6000 Frankfurt (Main) 1 (DE)**

(72) Erfinder: **Grebe, Karl, Altkönigstrasse 24a,
D-6240 Konigstein (DE)**

(74) Vertreter: **Oppermann, Ewald, Am Wiesengrund 35,
D-6050 Offenbach (Main) (DE)**

EP 0 004 970 B2

# Anordnung zur Erzeugung von Stellbewegungen an Kraftfahrzeugbelüftungseinrichtungen

Die Erfindung bezieht sich auf eine Anordnung zur Erzeugung von Stellbewegungen an durch Elektromotor angetriebenen Kraftfahrzeugbelüftungseinrichtungen, insbesondere an durch Dekkel verschließbare Dachöffnungen, wobei mit einem sich im Fahrbetrieb drehenden Kraftfahrzeugteil, dessen Drehzahl der Fahrgeschwindigkeit direkt proportional ist, ein Generator gekuppelt ist, von dem ein Steuersignal abgeleitet wird, mit dessen Hilfe der Stellantrieb für die Belüftungseinrichtung nach Maßgabe der Fahrgeschwindigkeit, bei höherer Geschwindigkeit in Schließrichtung und bei niedrigerer Geschwindigkeit in Öffnungsrichtung der Belüftungseinrichtung verstellbar ist.

Kraftfahrzeugbelüftungseinrichtungen, zu denen neben den verschiedenen nach der Art der Deckelbewegung bezeichneten Dachausführungen, nämlich Schiebedächer, Hebedächer und Schiebe-Hebe-Dächer, auch Schiebefenster und Ausstellfenster zählen, werden von Hand oder durch Elektromotor angetrieben. Bei Handantrieb ist in der Regel eine Bedienungskurbel oder ein Knebelgriff zu bedienen, während bei Elektromotorantrieb ein Schalter oder eine Taste für eine vom Ausmaß der gewünschten Stellbewegung abhängende Zeitdauer zu betätigen ist.

Erfolgt die Bedienung oder Betätigung während des Fahrbetriebs durch den Fahrzeuglenker, so wird dieser in der notwendigen Beobachtung des Verkehrsgeschehens beeinträchtigt. Das Ausmaß dieser unerwünschten bis gefährlichen Beeinträchtigung hängt von der Anzahl der Bedienungen bzw. Betätigungen je Zeitspanne ab. Bei Fahrbetriebszuständen mit rasch wechselnden Geschwindigkeiten besteht häufig das Bedürfnis, die Belüftungsöffnung der jeweiligen Fahrgeschwindigkeit anzupassen. Selbst wenn in solchen Fällen die Bedienung oder Betätigung routinemäßig erfolgt, d. h. vom Fahrzeuglenker kaum noch als bewußte Handlung wahrgenommen wird, werden Fahrsicherheit und Fahrkomfort unvermeidlich geschmälert.

Aus der US-PS 3 386 022 ist eine automatische Steuerung der Antriebsmittel für Fahrzeugfenster oder -dächer bekannt, die jedoch nur bei Auftreten von Niederschlägen anspricht. Zu diesem Zweck ist innerhalb einer elektrischen Schaltung ein Sensor vorgesehen, der auf Regentropfen mit einem Steuersignal reagiert. Die elektrische Schaltung sorgt dann für ein Schließen des Fensters oder Daches. Hierbei wird das Fenster oder Dach stets vollständig geschlossen, d. h. Zwischenstellungen des Fensters oder Daches sind weder beabsichtigt noch möglich.

Bei einer aus der DE-B-1 680 228 bekannten Anordnung der eingangs angegebenen Art handelt es sich um eine Einrichtung zur selbsttätigen Regulierung der Heizung eines Kraftfahrzeugs. Hierbei ist im Luftstrom eine verstellbare Luftklappe vorgesehen, die im Zusammenwirken mit einem regelbaren Gebläse einen konstanten, von der Fahrzeuggeschwindigkeit unabhängigen und auf den Wärmetauscher der Heizung gelenkten Luftstrom aufrechterhält. Dadurch soll selbsttätig im Fahrgastraum eines Kraftfahrzeugs eine konstante Innentemperatur bei konstantem Heizluftstrom unabhängig von der Fahrzeuggeschwindigkeit und von der Außentemperatur aufrechterhalten werden.

Aus der GB-PS 783 757 ist eine vom Staudruck abhängige Ventilatorregelung für Kraftfahrzeuge bekannt, die von einem geschwindigkeitsabhängigen Zentrifugalregler gesteuert wird.

Aus der FR-PS 1 067 314 geht eine in einem Lufteintrittsstutzen angeordnete Drosselklappe hervor, die nach Maßgabe der Fahrgeschwindigkeit in ihrer Stellung durch einen Zentrifugalregler gesteuert wird.

Der Erfindung liegt die Aufgabe zugrunde, Stellbewegungen an Kraftfahrzeugbelüftungseinrichtungen während der Fahrt automatisch ohne Zutun der Fahrzeuginsassen mittels einer Schaltungsanordnung zu bewirken, welche die Belüftungseinrichtung nach Maßgabe der jeweiligen Fahrgeschwindigkeit optimal in jeweils angepaßten Zwischenstellungen einstellt.

Gemäß der vorliegenden Erfindung wird diese Aufgabe dadurch gelöst, daß das Kraftfahrzeugteil eine Tachometerwelle ist, mit welcher der als Impulsgenerator ausgebildete Generator in Antriebsverbindung steht, dem ein Frequenz-Gleichstrom-Umsetzer zur Erzeugung eines der Impulsfolge proportionalen Gleichstromes nachgeschaltet ist, welcher in einem nachfolgenden Widerstand eine dem Gleichstrom proportionale Steuerspannung erzeugt, die einer Mehrzahl von parallel geschalteten auf unterschiedliche Umschaltschwellenwerte für die Steuerspannung eingestellten und als Spannungskomparatoren geschalteten Verstärkern zugeführt wird, welche bei Umschaltung jeweils ein fixes Spannungssignal einem den Verstärkern nachgeschalteten, an eine Versorgungsspannung angeschlossenen Summierverstärker zuführen, dessen Ausgangsspannungssignal einem Vergleicher aufgeschaltet ist, der mit einem von den Stellbewegungen der Belüftungseinrichtung mechanisch verstellbaren Potentiometer verbunden ist und dessen Ausgangssignal einem elektronischen Schalter mit Dreipunktverhalten aufgeschaltet ist, welcher durch ein positives oder negatives Spannungssignal des Vergleichers nach Überschreiten einer Totzone eingeschaltet wird und ein Einschaltzeitverzögerungsglied ansteuert, das an seinem Ablaufende ein Signal liefert, das dem Stellantrieb aufgeschaltet ist, daß zwei parallel geschaltete Gruppen von als Spannungskomparatoren geschalteten Verstärkern vorgesehen sind, wobei der einen Gruppe Umschaltschwellenwerte für den Stadtbetrieb und der anderen Gruppe Umschaltschwellenwerte für den Überlandbetrieb zugeordnet sind, daß zwei parallel geschaltete Summierverstärker vorhanden sind, die jeweils mit den Verstärkern einer Gruppe verbunden sind, und daß beide Summierverstärker an einem wahlweise zu betätigenden Umschalter angeschlossen sind, der dem Vergleicher vorgeschaltet ist.

Bei der Anordnung gemäß der vorliegenden Erfindung erfolgt eine Regelung der Größe der Belüftungsöffnung in Abhängigkeit von der Fahrgeschwindigkeit. Damit ermöglicht die erfindungsgemäße Anordnung die Vermeidung jeglichen Bedienungs- oder Betätigungseingriffs für die Belüftungseinrichtung während des Fahrbetriebes. Der Fahrzeuglenker kann seine Hände am Lenkrad belassen, ohne daß dadurch Belüftungsnachteile in Kauf zu nehmen sind. Die Belüftungseinrichtung wird nach Maßgabe der jeweiligen Fahrgeschwindigkeit optimal und automatisch eingestellt, was nicht nur der Fahrsicherheit, sondern auch dem Fahrkomfort zugutekommt. Bei Schiebedachausführungen, bei denen der Deckel kipp- bzw. schwenkbar gelagert ist, kann die erfindungsgemäße Anordnung dem Stellantrieb für die Kipp- bzw. Schwenkbewegung zugeordnet werden. Zur Erzielung einer optimalen Belüftung wird hierbei der Dachöffnungswinkel in Abhängigkeit von der Fahrgeschwindigkeit geregelt.

Die Anordnung ist hierbei so getroffen, daß die Einschaltung des Stellantriebs wahlweise für zwei für Stadtbetrieb und Überlandbetrieb unterschiedliche Fahrgeschwindigkeitsbereiche erfolgt. Diese Maßnahme erlaubt die Anpassung der Belüftung an die sehr unterschiedlichen Belüftungserfordernisse, die einerseits für den Stadtbetrieb und andererseits für den Überlandbetrieb vorliegen. Bei Dachausführungen mit kippbarem Deckel bedeutet dies, daß dem Stadtbetrieb größere Deckelöffnungswinkel zugeordnet sind, während bei Überlandbetrieb die automatische Regelung der Deckelstellung sich auf geringere Öffnungswinkel bezieht. Die Umschaltung der Anordnung von Stadtbetrieb auf Überlandbetrieb und umgekehrt kann durch eine einfache Tastenbetätigung erfolgen. Selbstverständlich erlaubt die erfindungsgemäße Anordnung auch die Abschaltung der automatischen fahrgeschwindigkeitsabhängigen Stellbetätigung, wenn eine individuelle Einstellung der Belüftungseinrichtung gewünscht wird, was in bekannter Weise durch Tastenbetätigung erfolgen kann.

Der Stellantrieb ist nach Geschwindigkeitsstufen und für unterschiedliche Stellweglängen bzw. unterschiedliche Schwenkwinkelgrößen einschaltbar. Hierbei wird der Stellantrieb nach Maßgabe von Geschwindigkeitsabstufungen in Tätigkeit gesetzt. Die Aufteilung auf drei oder vier Geschwindigkeitsstufen jeweils für den Stadtbetrieb und für den Überlandbetrieb reicht völlig aus, um eine der jeweiligen Fahrgeschwindigkeit angemessene Belüftungsöffnung zu erzielen. Dieser Effekt wird noch dadurch verstärkt, daß von Stufe zu Stufe unterschiedliche Stellweglängen bzw. unterschiedliche Schwenkwinkelgrößen vorgesehen sein können, wodurch die Anpassung an die jeweils zugeordnete Fahrgeschwindigkeit noch verbessert werden kann.

Bei der eine einfache Schaltung darstellenden erfindungsgemäßen Anordnung wird die Tachometerwelle zur Erzeugung des die Stellbewegungen auslösenden Steuersignals in Form der der Fahrgeschwindigkeit proportionalen Steuerspannung verwendet. Der bei positivem oder negativem Spannungssignal des Vergleichers eingeschaltete Stellantrieb wird automatisch abgeschaltet, wenn die Ausgangsspannung des mit der Belüftungseinrichtung mechanisch verbundenen Potentiometers dem Ausgangsspannungssignal des Summierverstärkers entspricht. Hierbei erfolgt die Abschaltung durch die bei Spannungsgleichheit eintretende Ausschaltung des elektronischen Schalters. Die im elektronischen Schalter vorgesehene zweckmäßig einstellbare Totzone trägt der bei Abschaltung des Stellantriebes zwangsläufig entstehenden Nachlaufbewegung Rechnung. Das Einschaltzeitverzögerungsglied bewirkt, daß der Stellantrieb nicht sofort bei einer Änderung des Ausgangsspannungssignals aus dem Summierverstärker eingeschaltet wird. Dadurch werden Stellbewegungen bei nur kurzzeitiger Fahrgeschwindigkeitsänderung des Fahrzeuges vermieden.

Die Betätigung des Umschalters für Stadt- und Überlandbetrieb kann hierbei auf elektrischem bzw. elektronischem Wege durch Tasten erfolgen, wobei dem Stadtbetrieb und dem Überlandbetrieb jeweils eine Taste zugeordnet ist, die bei Betätigung nicht nur den gewünschten Betriebszustand einstellt, sondern zugleich den anderen Betriebszustand ausschaltet. Die daneben noch für individuelle Einstellung vorzusehende Taste ist zweckmäßig so geschaltet, daß bei ihrer Betätigung sowohl die Automatik für Stadtbetrieb als auch diejenige für Überlandbetrieb außer Funktion gesetzt wird.

Die den Geschwindigkeitsstufen zugeordneten Umschaltschwellenwerte können auf einfache Weise dadurch einstellbar gestaltet werden, daß die Verstärker jeweils mit einem als Spannungsteiler geschalteten und an eine stabilisierte Versorgungsspannung angeschlossenen Trimmpotentiometer für die Einstellung der Umschaltschwellenwerte verbunden sind.

Für die Einstellung der Stellweglängen bzw. Schwenkwinkelgrößen kann die Anordnung entsprechend einfach so ausgebildet sein, daß an den Ausgang eines jeden Verstärkers ein Trimmpotentiometer angeschlossen ist.

Die maximale Belüftungsöffnungsgröße kann auf einfache Weise dadurch einstellbar gestaltet werden, daß die Versorgungsspannung dem Summierverstärker über einen als Spannungsteiler geschalteten Trimmpotentiometer zugeführt wird.

Weitere Einzelheiten und Merkmale der erfindungsgemäßen Anordnung werden nachfolgend unter Bezugnahme auf die beigefügten Zeichnungen näher erläutert. Darin zeigen

Fig. 1a und 1b das Blockschaltbild einer bevorzugten Schaltungsanordnung,

Fig. 2a bis 2e ein Ausführungsbeispiel einer Schaltung,

Fig. 3a bis 3l ein Flußschaltbild,

Fig. 4 die schematische Darstellung einer Belüftungseinrichtung für ein Kraftfahrzeugdach und

Fig. 5 die schematische Darstellung einer Belüftungseinrichtung in Form einer Kraftfahrzeugschiebefensteranordnung.

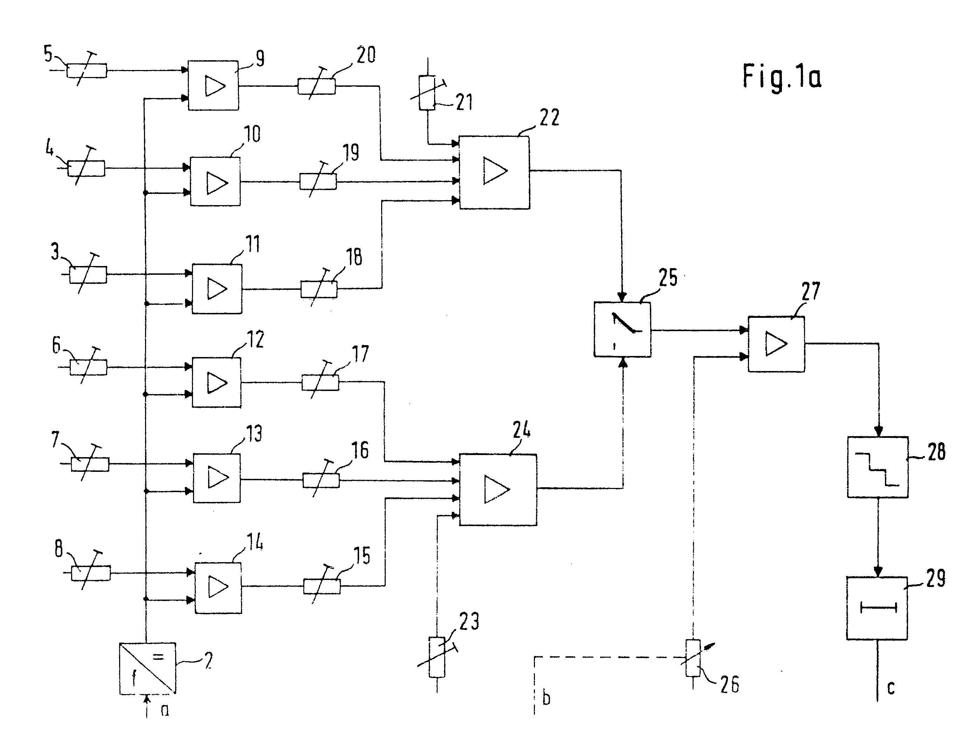

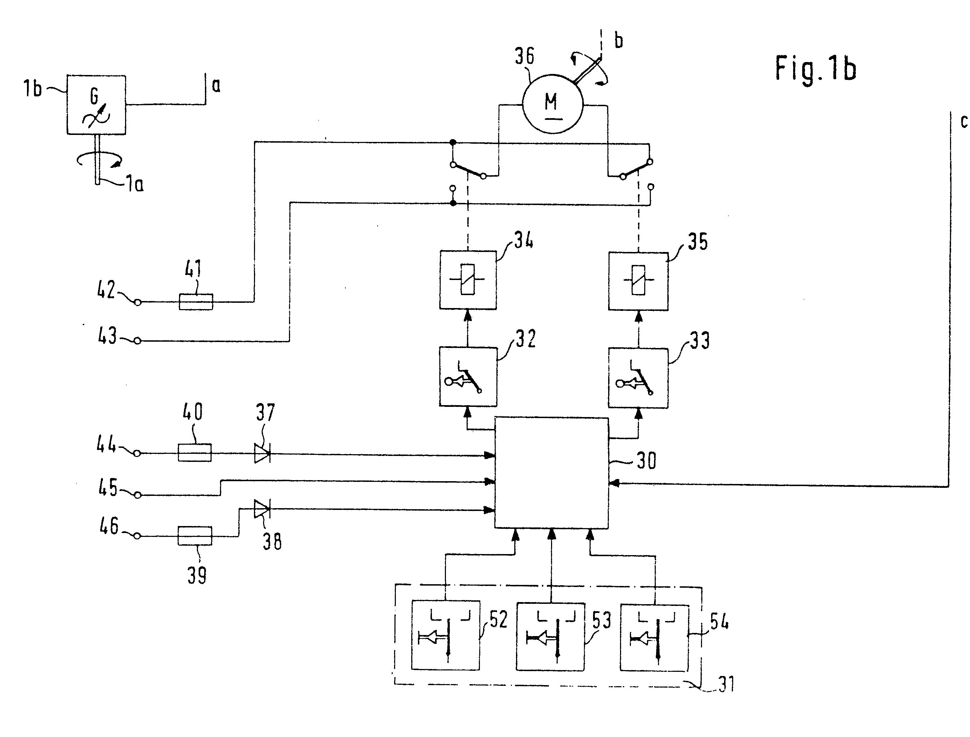

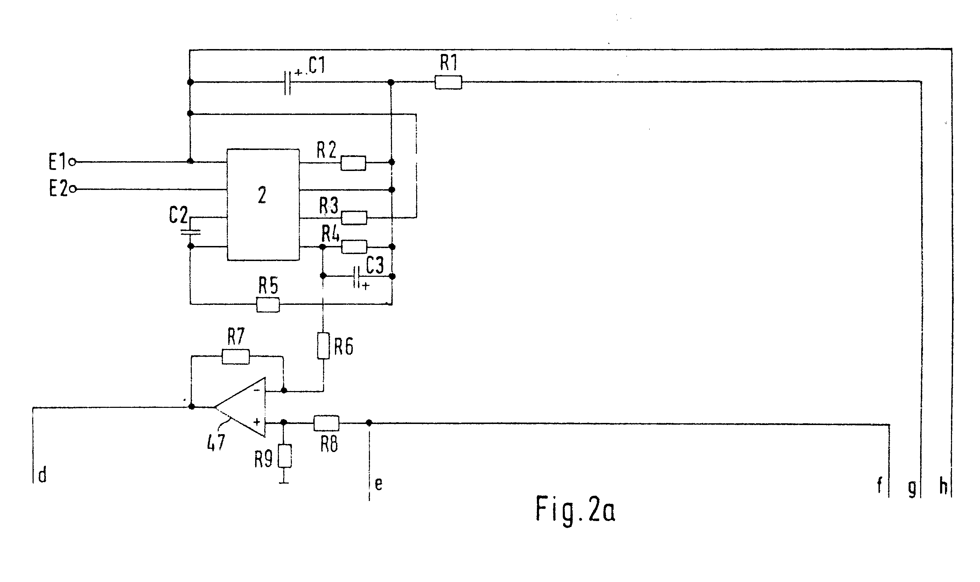

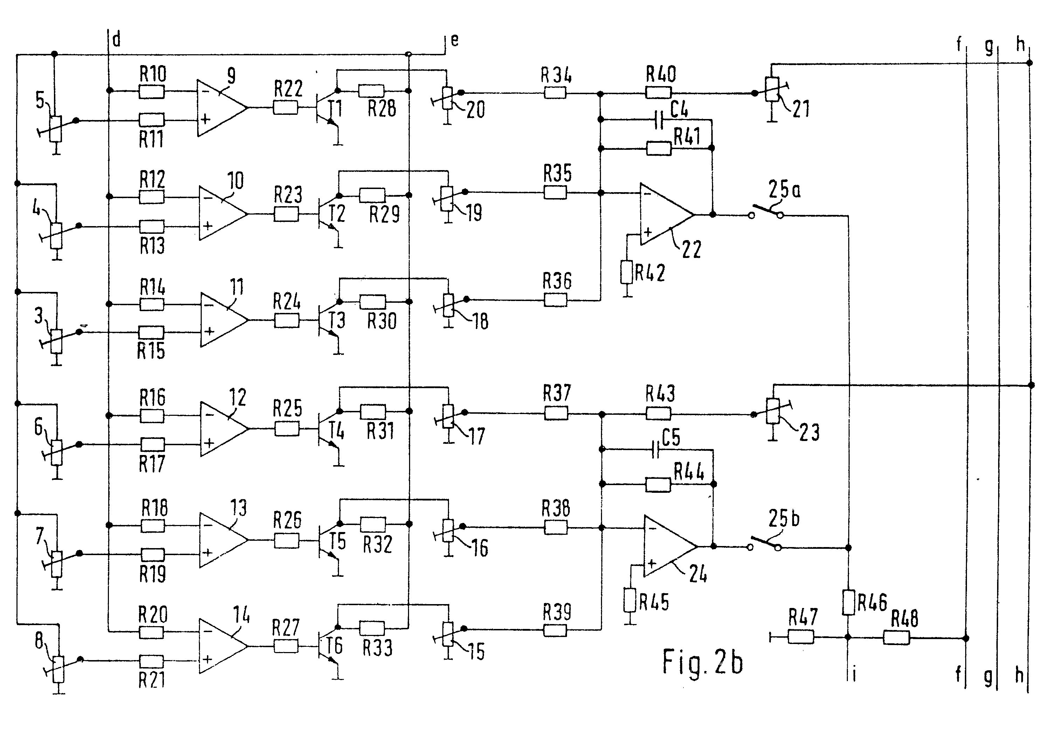

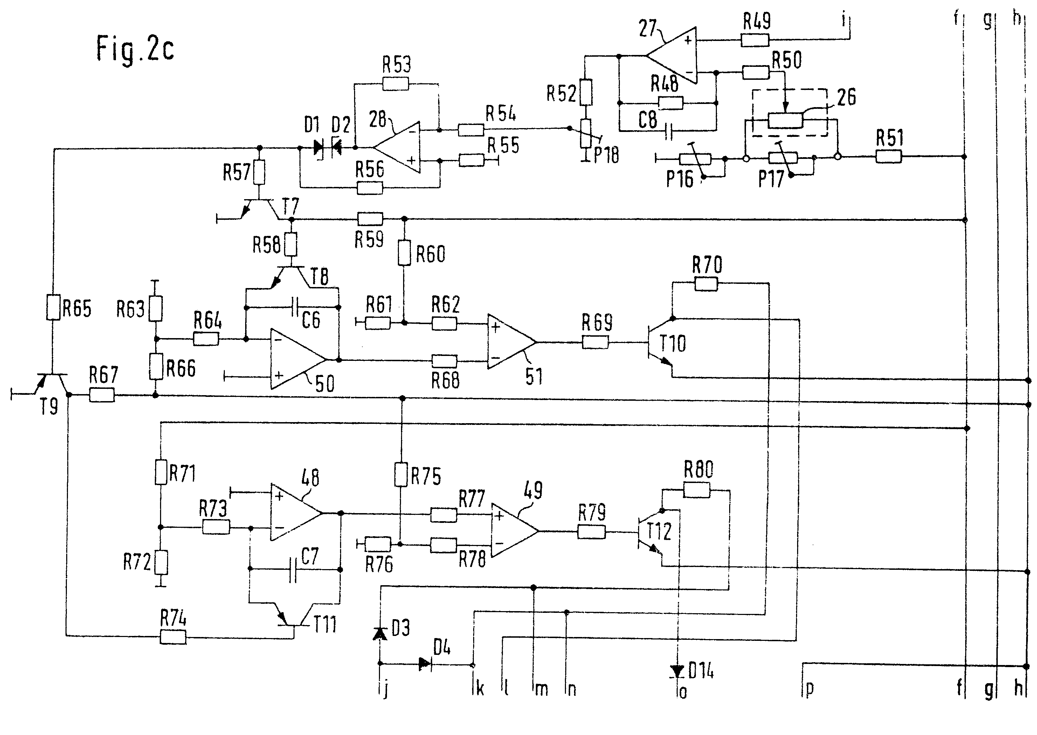

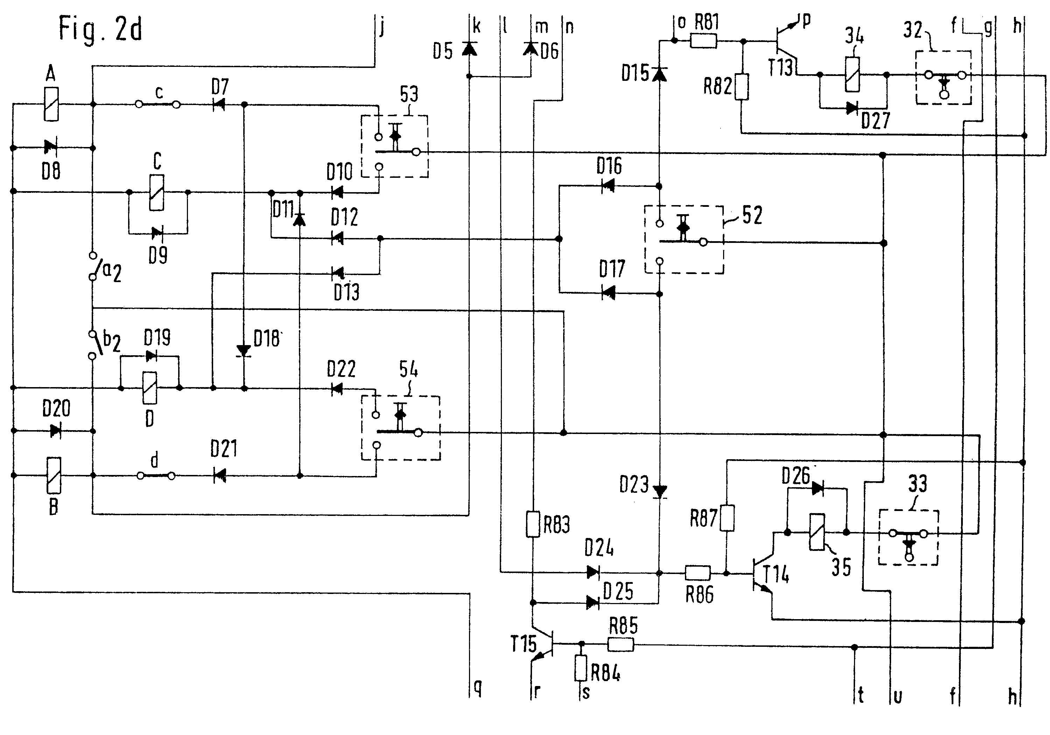

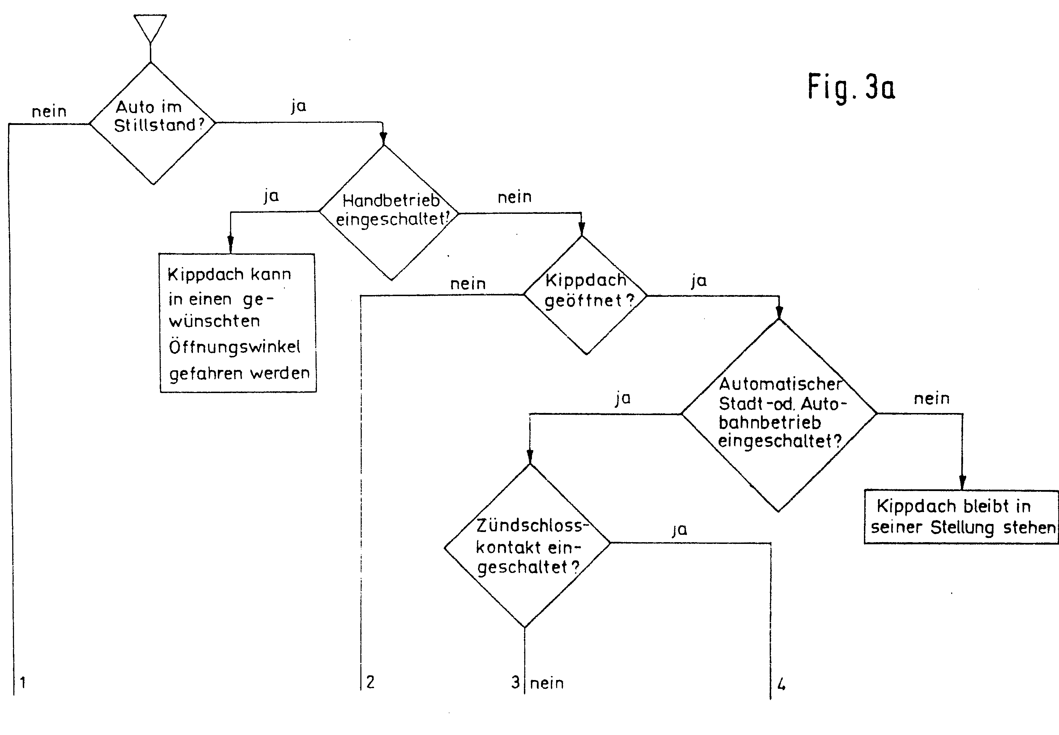

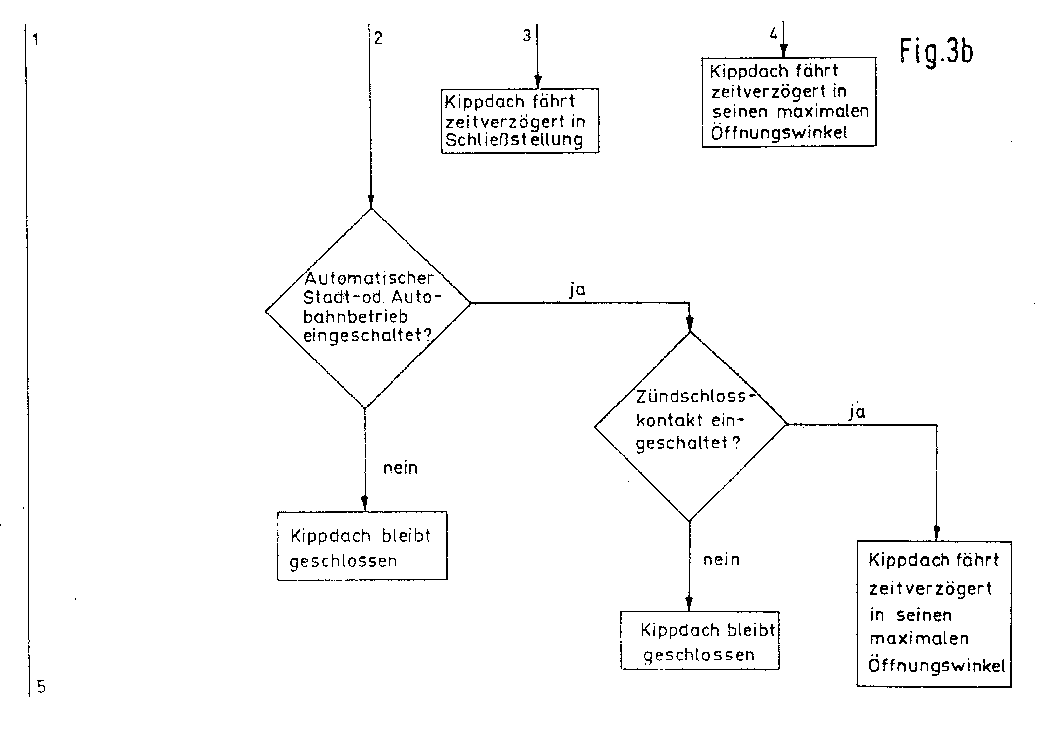

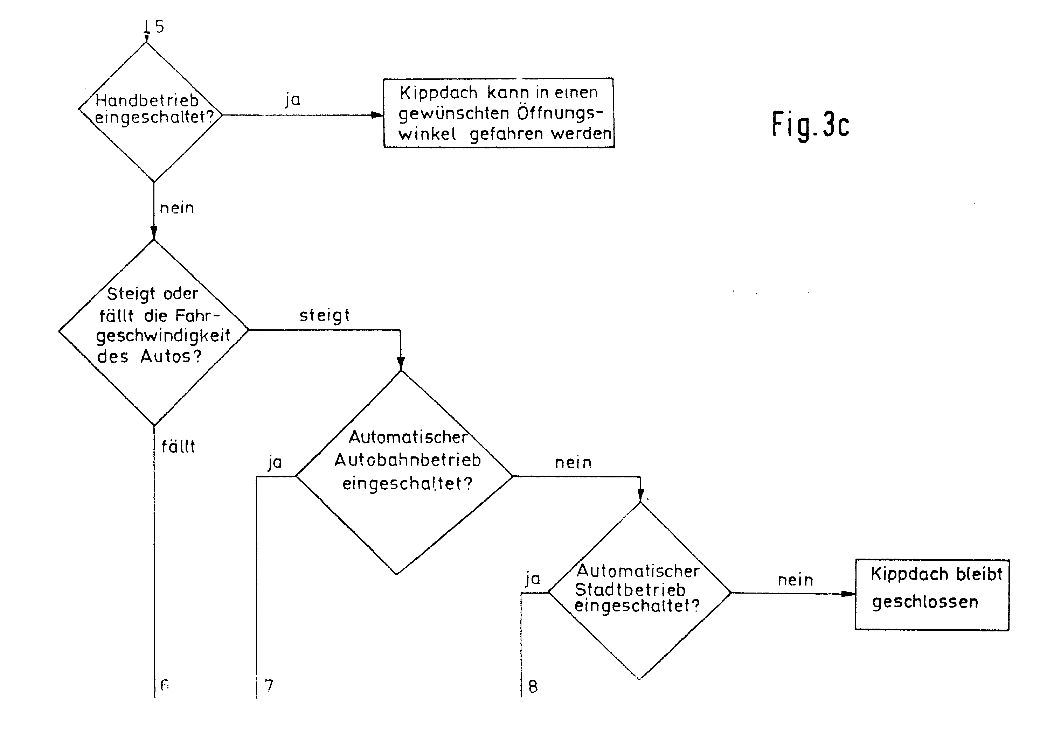

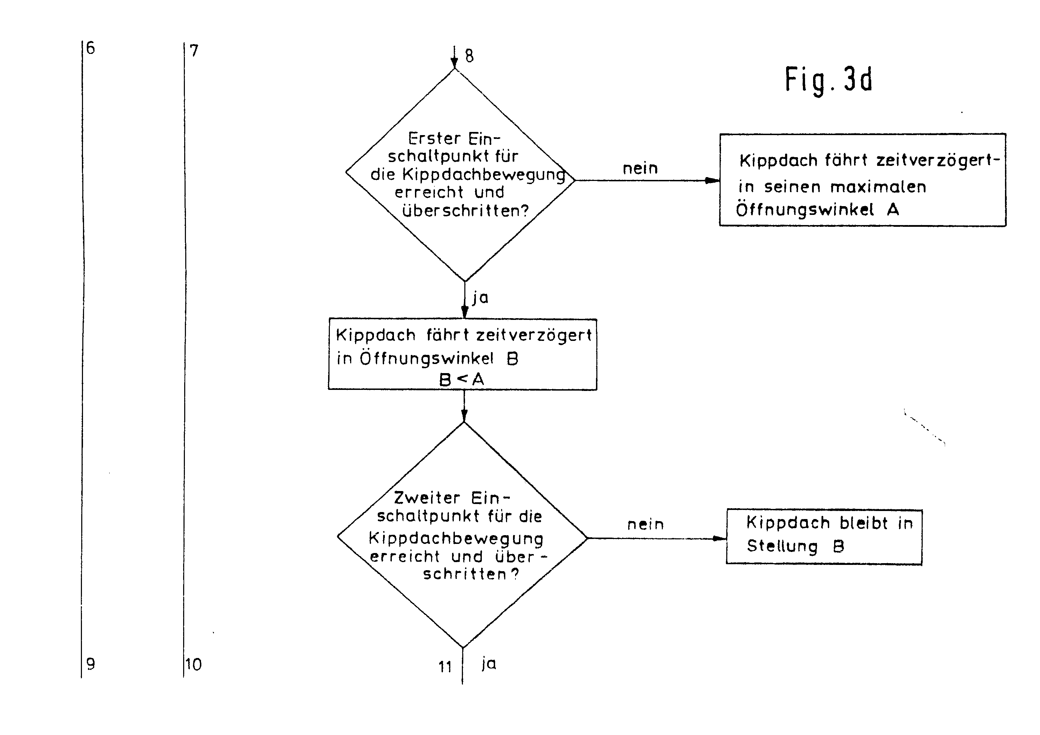

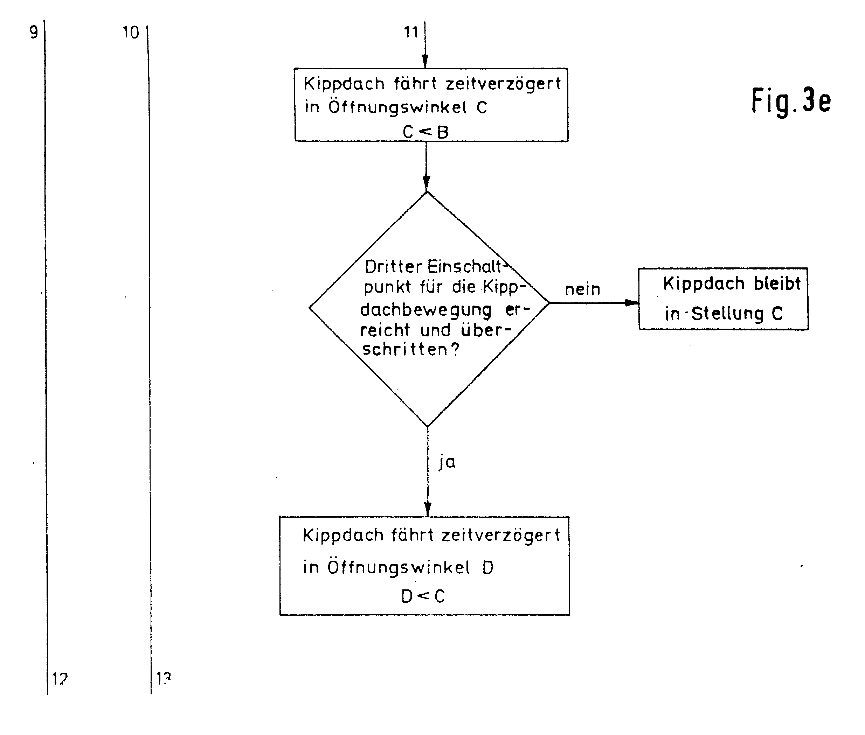

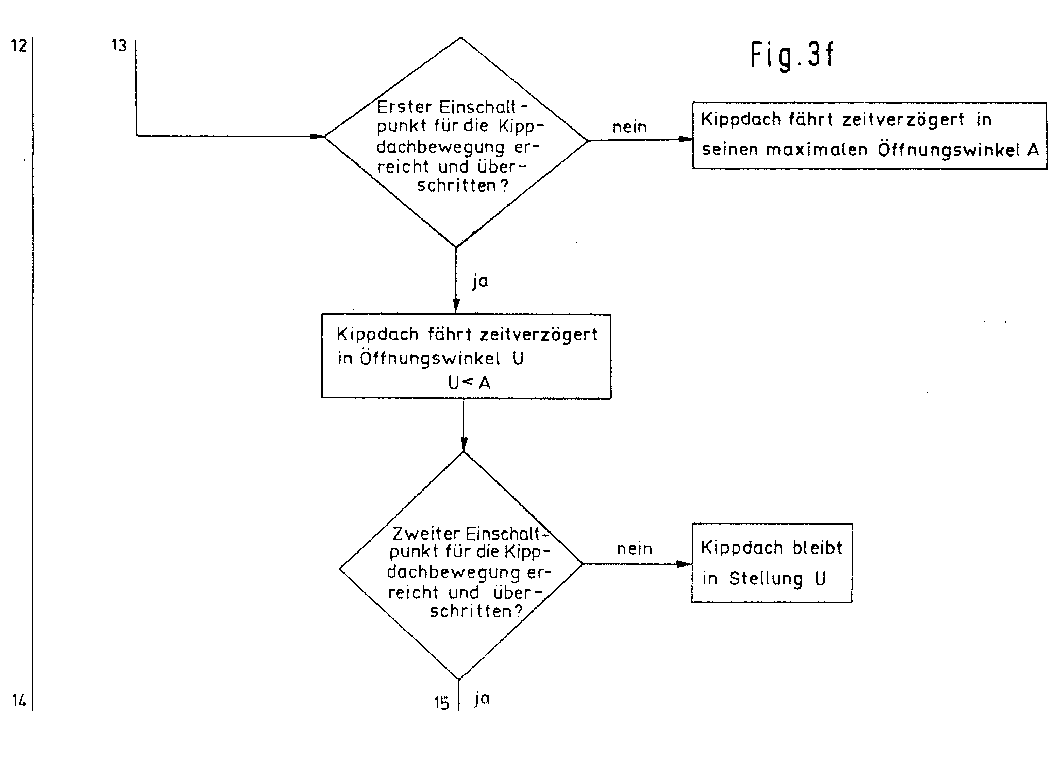

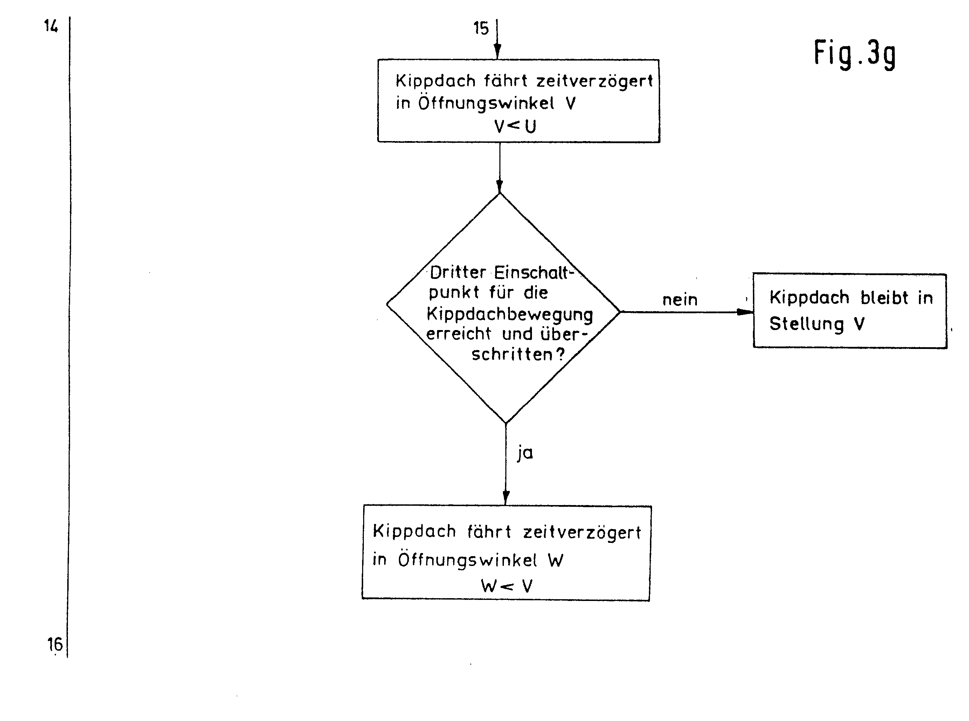

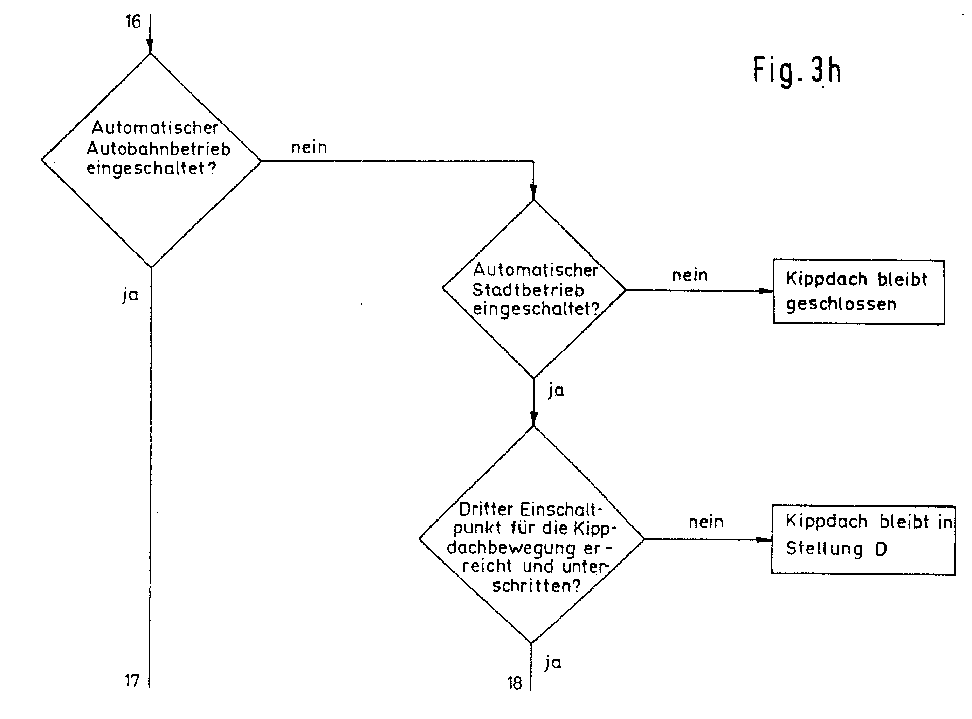

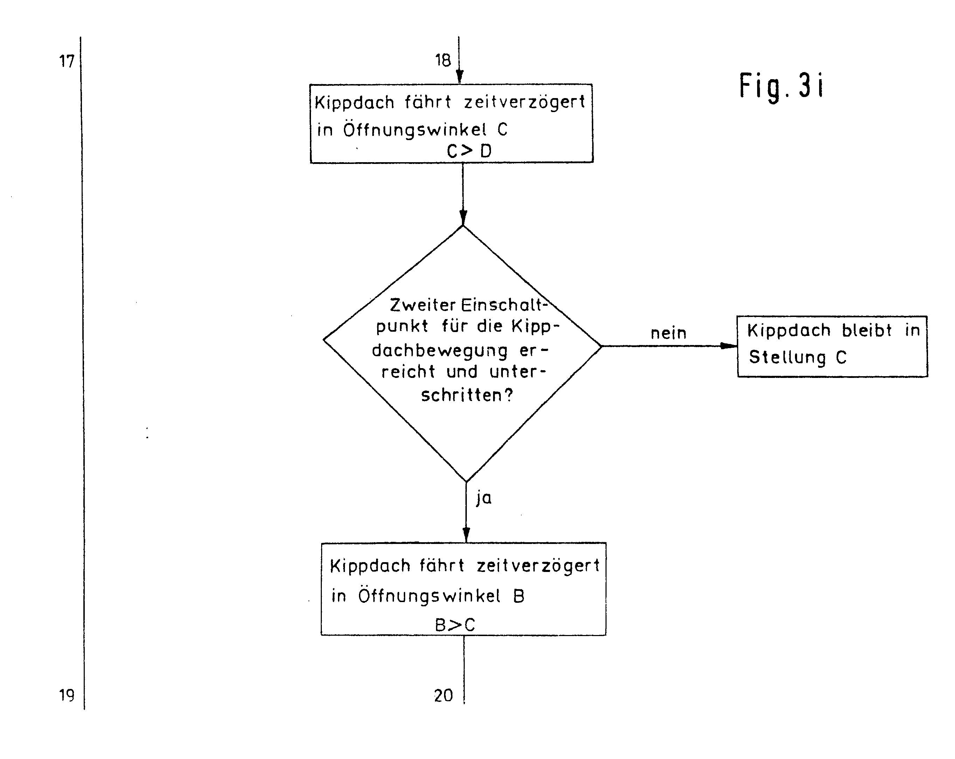

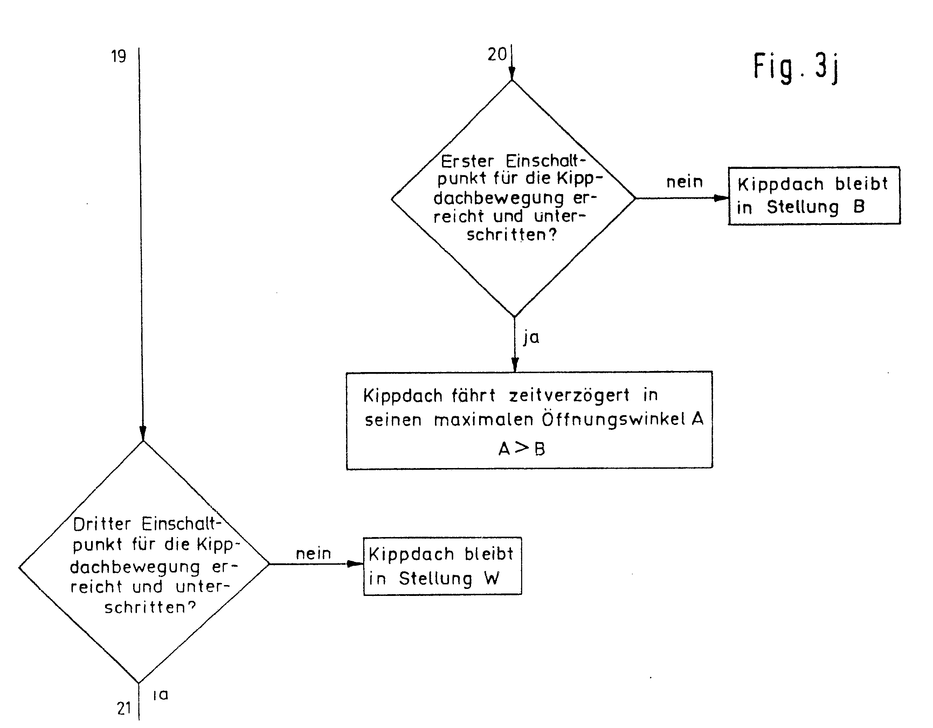

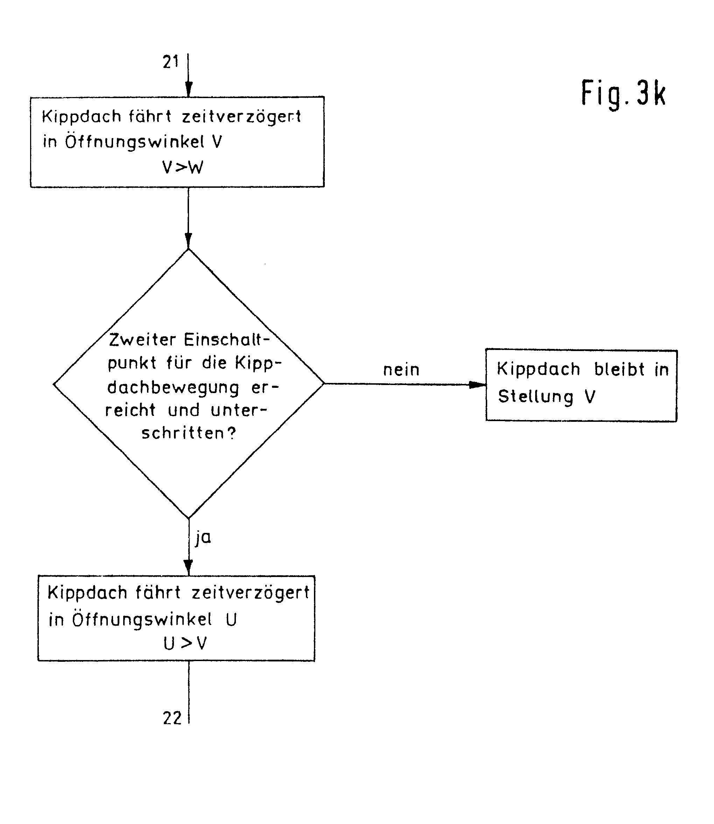

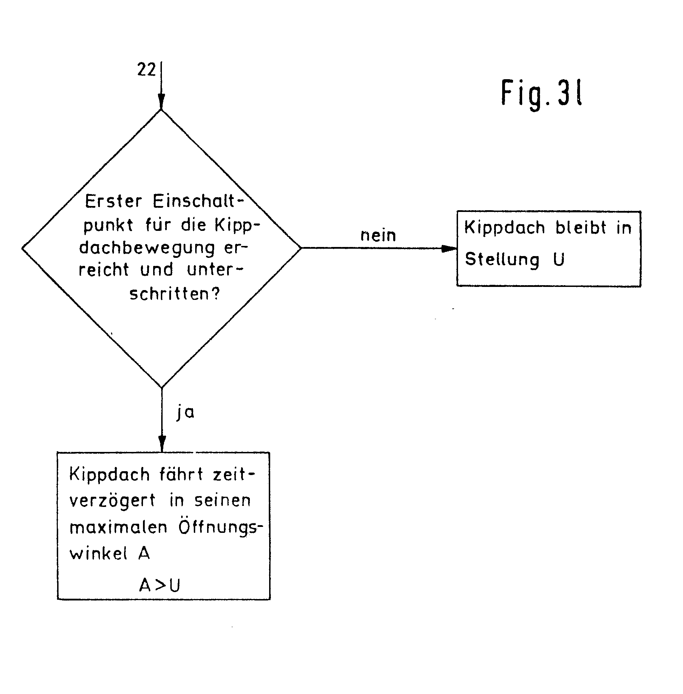

In den Fig. 1a und 1b bezeichnen die Buchstaben a bis c zusammengehörende Schaltungsverbindungen. In den Fig. 2a bis 2e sind zusammengehörende Schaltungsverbindungen durch die Buchstaben d bis u gekennzeichnet. In den Fig. 3a bis 3l schließlich sind jeweils zusammengehörende Linien durch die Zahlenfolge 1 bis 22 angegeben. Zur grundsätzlichen Erläuterung der Anordnung wird zunächst auf das Blockschaltbild gemäß der Fig. 1a und 1b Bezug genommen.

Der Impulsgenerator 1b, der in die Tachometerwelle 1a mechanisch eingebaut und von dieser mit der Wellendrehzahl angetrieben wird, erzeugt eine von der Drehzahl der Tachometerwelle abhängige Impulsfolge. Die Impulsfolge wird dem Frequenz-Gleichstrom-Umsetzer 2 zugeführt. Im Frequenz-Gleichstrom-Umsetzer 2 wird die zugeführte Impulsfolge in einen der Impulsfolge proportionalen Gleichstrom umgewandelt. Dieser erzeugt wiederum in einem im Umsetzer eingebauten elektrischen Widerstand eine dem Gleichstrom proportionale Gleichspannung, die als Eingangssteuerspannung den als Spannungskomparatoren geschalteten Verstärkern 9 bis 14 zugeführt wird. Die den Verstärkern 9 bis 14 zugeführte Steuerspannung ist der Umdrehungszahl der Tachometerwelle proportional und damit auch der Fahrgeschwindigkeit des Kraftfahrzeugs.

Jeder der Verstärker 9 bis 14 besitzt zwei Eingänge und einen Ausgang. Wie aus der Zeichnung ersichtlich ist, wird jedem der Verstärker auf einem Eingang die Steuerspannung des Umsetzers 2 zugeführt. Der zweite Eingang eines jeden Verstärkers ist mit einem Trimmpotentiometer 3 bis 8, die als Spannungsteiler geschaltet und an die stabilisierte in der Funktionseinheit 30 erzeugte Versorgungsspannung angeschlossen sind, verbunden. An den Ausgang eines jeden Verstärkers 9 bis 14 ist ein Trimmpotentiometer 15 bis 20 angeschlossen.

Von den Trimmpotentiometern 15 bis 20 gelangen die elektrischen Spannungen zu den Eingängen der Verstärker 22 bzw. 24, die als Summierverstärker geschaltet sind. An einen vierten Eingang des Verstärkers 22 bzw. 24 ist jeweils ein weiteres Trimmpotentiometer 21 bzw. 23 angeschlossen, das ebenfalls als Spannungsteiler geschaltet und mit der stabilisierten Versorgungsspannung verbunden ist. Die Trimmpotentiometer 3, 4, 5 und 18 bis 21 und die Verstärker 9 bis 11 und 22 stellen die Eingangsfunktionsgruppe für den Stadtbetrieb, die Trimmpotentiometer 6, 7, 8, 15, 16, 17 und 23 und die Verstärker 12, 13, 14 und 24 die Eingangsfunktionsgruppe für den Überlandbetrieb dar.

Die Wirkungsweise der beiden Funktionsgruppen wird anhand der für den Stadtbetrieb vorgesehenen Funktionsgruppe näher erläutert. Die Trimmpotentiometer 3, 4, 5 dienen der variablen Einstellung der Umschaltschwellen der Spannungskomparatoren 9, 10, 11. Solange sich das Kraftfahrzeug im Stillstand befindet, wird am Ausgang des Umsetzers 2 keine elektrische Steuerspannung erzeugt, so daß die Spannungskomparatoren kein wirksames Ausgangssignal abgeben. Wird das Fahrzeug in Bewegung gesetzt, so erhöht sich mit zunehmender Fahrgeschwindigkeit auch die elektrische Steuerspannung. Erreicht nun der Wert der Steuerspannung die eingestellte Umschaltschwelle z. B. des Spannungskomparators 11, so wird dieser umgeschaltet und an seinem Ausgang entsteht ein fixes Spannungssignal, das über das nachfolgend geschaltete Trimmpotentiometer 18 dem Summierverstärker 22 zugeführt wird. In gleicher Weise werden die Spannungskomparatoren 9 und 10 mit zunehmender Steuerspannung umgeschaltet und deren fixe Ausgangssignale gelangen über die Trimmpotentiometer 20 und 19 ebenfalls zum Summierverstärker 22.

Verringert sich die Fahrgeschwindigkeit des Fahrzeugs, so werden die Spannungskomparatoren 9, 10 und 11 in umgekehrter Reihenfolge durch die Abnahme der Steuerspannung wieder in ihre Ausgangslage, in welcher von ihnen kein fixes Spannungssignal ausgeht, umgeschaltet.

An den Trimmpotentiometern 3, 4, 5 können innerhalb des Fahrgeschwindigkeitsbereiches des Fahrzeugs drei verschiedene voneinander unabhängige Einstellungen für die Umschaltschwellen der Spannungskomparatoren 9, 10 und 11 vorgenommen werden. Mit den Trimmpotentiometern 3, 4, 5 werden die Einschaltpunkte für die Aktivierung des Stellantriebs zwecks Bewegung der Belüftungseinrichtung, beispielsweise des Kippdaches, festgelegt.

Der Summierverstärker 22 besitzt vier Eingänge und einen Ausgang. Drei Eingänge sind mit den Trimmpotentiometern 18, 19, 20 verbunden, der vierte Eingang steht mit dem Trimmpotentiometer 21 in Verbindung. Das Ausgangssignal des Summierverstärkers 22 wird dem Umschalter 25 zugeführt.

Solange sich das Fahrzeug bei eingeschalteter Zündung im Stillstand befindet, werden den Eingängen des Summierverstärkers 22 keine Spannungssignale zugeführt. An den vierten Eingang des Summierverstärkers 22 wird jedoch das Spannungssignal des Trimmpotentiometers 21 eingegeben. Der Summierverstärker 22 ist nun so beschaltet, daß in diesem Betriebszustand, d. h. bei Fahrzeugstillstand, das Ausgangssignal des Summierverstärkers 22 ein Maximum aufweist. Dieses maximale Ausgangsspannungssignal hat die größte Lüftungsöffnung, beispielsweise den größten Öffnungswinkel des Kippdaches, zur Folge. Die maximale Belüftungsöffnung, z. B. der maximale Öffnungswinkel, kann mit Hilfe des Trimmpotentiometers 21 eingestellt werden.

Wird nun das Fahrzeug mit steigender Fahrgeschwindigkeit in Bewegung gesetzt, so erhalten die Eingänge des Summierverstärkers 22 stufenweise ein Spannungssignal, das vom Summierverstärker so verarbeitet wird, daß das Ausgangsspannungssignal des Summierverstärkers entsprechend der Eingangsänderung verkleinert wird. Dies hat zur Folge, daß sich beispielsweise der Öffnungswinkel des Kippdaches stufenweise in drei Stufen verkleinert. Mit den Trimmpotentiometern 18, 19, 20 lassen sich die für die jeweiligen Stufen gewünschten Öffnungsgrößen, z. B. die Öffnungswinkel des Kippdaches, einstellen.

Die Arbeitsweise der dem Überlandbetrieb zugeordneten Funktionsgruppe ist analog. Auch hierbei wird das Ausgangsspannungssignal des Summierverstärkers 24 dem Umschalter 25 zugeführt.

Mit dem Umschalter 25 kann entweder das Ausgangsspannungssignal des Summierverstärkers 22 oder des Summierverstärkers 24 dem Vergleicher 27 zugeführt werden. Die Umschaltung des Schalters 25 erfolgt über die Bedieneinheit 31 in Verbindung mit der Funktionseinheit 30.

Der Vergleicher 27 besitzt zwei Eingänge. Ein Eingang ist mit dem Umschalter 25, der andere mit dem Potentiometer 26 verbunden, dessen Drehachse mechanisch vom Bewegungssystem der Belüftungseinrichtung, z. B. des Kippdaches, verstellt wird. Dem Stellantrieb für die Belüftungseinrichtung ist der Gleichstromantriebsmotor 36 zugeordnet.

Das Ausgangssignal des Vergleichers 27 wird dem elektronischen Schalter 28, der ein Dreipunktverhalten besitzt, zugeführt. Die dem Vergleicher 27 zugeführten Eingangsspannungen werden von diesem verglichen. Sind beide Eingangsspannungen gleich groß, so entsteht am Ausgang des Vergleichers kein Spannungssignal, und der Schalter 28 wird nicht beeinflußt. Sind aber beide Eingangsspannungen ungleich, so entsteht am Ausgang des Vergleichers 27 entweder ein positives oder ein negatives Spannungssignal, das, wenn es die einstellbare Totzone des elektronischen Schalters 28 überschreitet, diesen einschaltet. Durch die Aktivierung des Schalters 28 wird die elektronische Einschaltverzögerung 29 angeregt, die an ihrem Ablaufende ein Signal liefert, das über die Funktionseinheit 30 und die Endschalter 32 bzw. 33 das Motoreinschaltrelais 34 bzw. 35 anregt und damit eine Verstellung der Belüftungseinrichtung, z. B. eine Verstellung des Öffnungswinkels des Kippdaches, bewirkt.

Die Verstellbewegung erfolgt so lange, bis die vom Potentiometer 26 gelieferte Eingangsspannung des Vergleichers 27 diesen auf das Ausgangsspannungssignal zurückführt, wodurch der elektronische Schalter 28 ausgeschaltet wird. Die im Schalter 28 einstellbare Totzone wird so eingestellt, daß die durch die Abschaltung des Antriebssystems zwangsläufig entstehende Nachlaufbewegung nicht zu einer erneuten Einschaltung des Antriebssystems in umgekehrter Richtung führt.

Durch die elektronische Einschaltverzögerung erreicht man, daß das Antriebssystem der Belüftungseinrichtung nicht sofort bei einer Änderung des Ausgangsspannungssignals des Summierverstärkers 22 bzw. 24 eingeschaltet wird, sondern erst dann, wenn die Änderung des Ausgangsspannungssignals länger als die Einschaltzeit der elektronischen Zeitverzögerung 29 dauert. Dadurch werden Bewegungen der Belüftungseinrichtung bei einer kurzzeitigen Fahrgeschwindigkeitsänderung des Kraftfahrzeuges vermieden, wenn sich dessen Fahrgeschwindigkeit in der Nähe eines Umschaltpunktes für eine neue Belüftungseinstellung bewegt.

Die Endschalter 32 bzw. 33 befinden sich im Bereich des bewegten Bauteils der Belüftungseinrichtung und sind dort so angebracht, daß ein Schalter bei geschlossener und der andere Schalter bei voll geöffneter Belüftungseinrichtung betätigt wird, wodurch ein eingeschaltetes Relais 34 bzw. 35 ausgeschaltet wird und damit auch der Antriebsmotor 36 der Belüftungseinrichtung.

Die Relais 34 bzw. 35 bewirken den Rechts- bzw. Linkslauf des Gleichstrommotors 36. Die Schaltkontakte der Relais sind so miteinander verbunden, daß der Gleichstrommotor elektrisch kurzgeschlossen wird, wenn die Relais ausgeschaltet sind. Durch diese Schaltungsmaßnahme erreicht man eine schnellere Abbremsung des Gleichstrommotors, die sich außerdem stabilisierend auf die Bewegung der Belüftungseinrichtung auswirkt. Der Motorstromkreis ist ein separater Stromkreis. Er wird durch die Sicherung 41 abgesichert. Die Motoranschlüsse 42 und 43 werden mit der Autobatterie verbunden.

Im Bedienfeld 31 sind drei Wipptastenschalter 52, 53 und 54 eingebaut, von denen der Schalter 52 zur individuellen, d. h. nicht automatischen Verstellung der Belüftungseinrichtung, z. B. des Kippdaches, dient. Mit den Schaltern 53 bzw. 54 kann die automatisch erzeugte Stellbewegung der Belüftungseinrichtung für den Stadtbetrieb bzw. den Überlandbetrieb ein- bzw. ausgeschaltet werden. Das Bedienfeld 31 ist an die Funktionseinheit 30 angeschlossen. In dieser werden die Schaltfunktionen realisiert. Die Schaltfunktionen für den Automatikbetrieb sind so ausgeführt, daß immer nur eine Variante wirksam ist, d. h. ist z. B. der Stadtbetrieb eingeschaltet, so wird, wenn Überlandbetrieb eingeschaltet wird, der Stadtbetrieb automatisch ausgeschaltet und umgekehrt. Bei Betätigung des Schalters 52 wird der Automatikbetrieb insgesamt ausgeschaltet.

Der Strom für die Energieversorgung der elektrischen Schaltung wird über die Anschlüsse 45 und 46 zugeführt, wird der Funktionseinheit 30 zugeleitet und von dort zu den anderen Funktionseinheiten, d. h. zu den Trimmpotentiometern und Verstärkern, weitergeleitet. In der Anschlußleitung 46 befindet sich eine Schutzsicherung 39 und eine Schutzdiode 38. Der Anschluß 44, der mit dem Einschaltkontakt des Kraftfahrzeugzündschlosses verbunden ist, wird über die Schutzsicherung 40 und die Schutzdiode 37 ebenfalls mit der Funktionseinheit 30 verbunden. Wird der Zündschloßkontakt eingeschaltet, so öffnet sich die Belüftungseinrichtung bei eingeschaltetem Automatikbetrieb und bei Stillstand des Kraftfahrzeugs auf ihre maximal eingestellte Öffnungsgröße, z. B. auf den maximal eingestellten Öffnungswinkel des Kippdaches. Wird der Zündschloßkontakt ausgeschaltet, so schließt sich die Belüftungseinrichtung.

Zur Erläuterung eines Schaltungsbeispiels wird nunmehr auf die Fig. 2a bis 2e unter Verwendung der Bezugszahlen aus den Fig. 1a und 1b Bezug genommen. Die Anschlußklemmen E1 und E2, an die der nicht dargestellte Impulsgeber 1b angeschlossen ist, sind mit den Eingängen des Frequenz-Strom-Umsetzers 2 verbunden. Der Frequenz-Strom-Umsetzer ist extern mit den Widerständen R1 bis R5 und mit den Kondensatoren C1, C2, C3 beschaltet. Die den Eingängen E1 und E2 zugeführte Impulsfolge wird im Frequenz-Strom-Umsetzer in einen der Frequenz proportionalen Gleichstrom umgesetzt. Der Ausgangsstrom des Umsetzers erzeugt am Widerstand R4 eine Spannung, die über den Widerstand R6 dem Differenzverstärker 47 zugeführt wird. Der Frequenz-Strom-Umsetzer besteht im Prinzip aus der Reihenschaltung eines Schmitt-Triggers, eines monostabilen Multivibrators und einer Stromstufe. Der Vorwiderstand R1 dient zur Strombegrenzung, da sich die Gesamtschaltung des Umsetzers wie eine Zenerdiode verhält. Kondensator C1 dient zur eingangsseitigen und Kondensator C3 zur ausgangsseitigen Siebung der Gleichspannung. Kondensator C2 und Widerstand R5 bestimmen die Einschaltdauer des Multivibrators. Die Widerstände R1 und R3 sind für den Grundbetrieb der Schaltung erforderlich.

Die am Widerstand R4 erzeugte Spannung wird über den Widerstand R6 dem invertierenden Eingang des Differenzverstärkers 47 zugeführt. Dem nicht invertierenden Eingang des Differenzverstärkers wird über den Widerstand R8 eine positive Spannung zugeführt. Die Schaltung des Differenzverstärkers ist so dimensioniert, daß bei einer Eingangsimpulsfolge von Null in den Umsetzer 2 die Ausgangsspannung des Differenzverstärkers 47 Null Volt beträgt.

Die Ausgangsspannung des Differenzverstärkers wird zu den invertierenden Eingängen der als Spannungskomparatoren geschalteten Verstärker 9 bis 14 geleitet. Der nicht invertierende Eingang jedes Verstärkers ist jeweils mit dem Ausgang eines Trimmpotentiometers 5 bis 8 verbunden. Den Eingängen der Trimmpotentiometer wird eine positive Spannung zugeführt. An jedem Ausgang der Verstärker 9 bis 14 ist eine Transistorschaltstufe angeschlossen. Die jeweiligen Arbeitswiderstände R28 bis R33 sind mit der positiven Spannung verbunden. Das Ausgangssignal einer jeden Schaltstufe wird einem Trimmpotentiometer 15 bis 20 zugeleitet. Die Teilspannungen der Trimmpotentiometer 20, 19, 18 werden über die Eingangswiderstände R34, R35, R36 dem invertierenden Eingang des Verstärkers 22 zugeführt, der als Summierer geschaltet ist. Über den Eingangswiderstand R40 und das Trimmpotentiometer 21 gelangt eine negative Spannung zum invertierenden Eingang des Summierers: In gleicher Weise werden die Teilspannungen der Trimmpotentiometer 17, 16, 15 und 23 dem invertierenden Eingang des Summierers 24 zugeführt.

Der Ausgang des Summierers 22 ist mit dem Relaiskontakt 25a, der Ausgang des Summierers 24 mit dem Relaiskontakt 25b verbunden. Die Relaiskontakte 25a und 25b entsprechen, dem mit Bezug auf Fig. 1a beschriebenen Umschalter 25.

Die bisher beschriebene Schaltung berücksichtigt wiederum eine dem Stadtbetrieb zugeordnete und eine dem Überlandbetrieb zugeordnete Funktionsgruppe, die jeweils parallel geschaltet sind. Nachfolgend wird nur die dem automatischen Stadtbetrieb zugeordnete Funktionsgruppe im Detail beschrieben, da die andere Funktionsgruppe analog ist.

An den Trimmpotentiometern 5, 4, 3 werden die Ein- bzw. Ausschaltpunkte für die Einleitung der Stellbewegungen für die Kraftfahrzeugbelüftungseinrichtung eingestellt. Zur Vereinfachung wird nachfolgend stets auf ein Kippdach Bezug genommen. Befindet sich das Kraftfahrzeug im Stillstand, so wird den invertierenden Eingängen der Spannungskomparatoren 9, 10, 11 keine elektrische Spannung zugeführt. An den Ausgängen der Spannungskomparatoren herrscht dann ein positives Potential. Dadurch werden die jeweiligen angeschlossenen Transistoren T1, T2, T3 in den leitenden Zustand versetzt, die Kollektorspannung der Transistoren sinkt auf das Nullpotential, und über die Trimmpotentiometer 20, 19, 18, an denen die verschiedenen Öffnungswinkel des Kippdaches eingestellt werden, gelangen auch keine elektrischen Spannungen auf den invertierenden Eingang des Summierers 22, mit Ausnahme der negativen Spannung über das Trimmpotentiometer 21 und den Widerstand R40.

Die Funktion der Schaltung ist so ausgelegt, daß bei einer bestimmten positiven Maximalspannung am Ausgang des Summierers 22 und bei eingeschaltetem Automatikbetrieb das Kippdach in seinen maximalen Öffnungswinkel fährt. Diese positive Maximalspannung wird durch das Trimmpotentiometer 21 eingestellt.

Steigt nun durch den Fahrbetrieb des Kraftfahrzeugs die Spannung an den invertierenden Eingängen der Spannungskomparatoren 9, 10, 11 und überschreitet diese z. B. den am Trimmpotentiometer 5 eingestellten Spannungswert, so schaltet der Spannungskomparator 9 auf eine negative Ausgangsspannung um. Dadurch wird der Transistor T1 gesperrt, seine Kollektorspannung steigt auf einen fixen positiven Spannungswert und über das angeschlossene Trimmpotentiometer 20 erhält der Summierer 22 eine positive Eingangsspannung. Da diese positive Eingangsspannung vom Verstärker invertiert wird, verkleinert sich entsprechend dem Verstärkungsfaktor die Ausgangsspannung des Summierers 22.

In gleicher Weise wird, wenn die eingestellten Spannungswerte der Trimmpotentiometer 4 und 3 überschritten werden, die Ausgangsspannung des Summierers noch mehr verkleinert. Eine Abnahme der Ausgangsspannung des Summierers hat die Verkleinerung des Öffnungswinkels des Kippdaches zur Folge.

Vom Relaiskontakt 25a bzw. 25b gelangt die Ausgangsspannung des Summierers 22 bzw. 24 zum Spannungsteiler R46, R47, R48 und von dort über den Eingangswiderstand R49 zum nicht invertierenden Eingang des Verstärkers 27. Der invertierende Eingang des Verstärkers 27 ist über den Eingangswiderstand R50 mit dem Ausgang des Potentiometers 26 verbunden. Die (nicht dargestellte) Welle des Potentiometers wird mechanisch durch das Kippdachbewegungssystem verstellt. Das Trimmpotentiometer P16 dient zum Nullabgleich und das Trimmpotentiometer P17 zum Bereichsabgleich des Potentiometers 26. Über den Widerstand R51 wird ihnen eine positive Spannung zugeführt.

Ist die positive Spannung am nicht invertierenden Eingang des Verstärkers 27 größer als die Ausgangsspannung des Potentiometers 26 am invertierenden Eingang, so erzeugt der Verstärker entsprechend seinem Verstärkungsfaktor eine positive Ausgangsspannung, die dem Eingang des Trimmpotentiometers P18 zugeleitet wird. Die durch das Trimmpotentiometer P18 geteilte Ausgangsspannung des Verstärkers 27 wird über den Eingangswiderstand R54 dem invertierenden Eingang des Verstärkers 28 zugeführt, der als Kippstufe mit Dreipunktverhalten geschaltet ist. Dieser Verstärker entspricht dem mit Bezug auf Fig. 1a beschriebenen Dreipunktschalter. Überschreitet die negative Ausgangsspannung des Verstärkers 28 die Zenerspannung der Zenerdiode D2 und die Schleusenspannung der Diode D1, so kippt der Verstärker, unterstützt durch den Mitkopplungswiderstand R56, in eine stabile Arbeitslage.

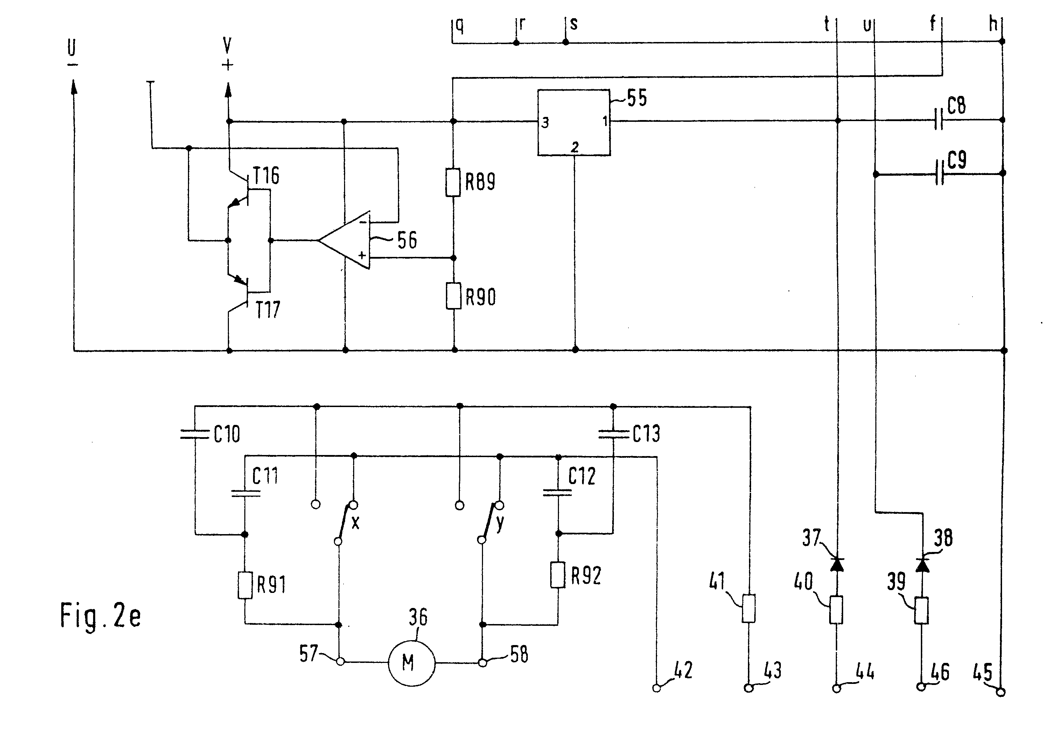

Durch die negative Ausgangsspannung der Kippschaltung wird der angeschlossene Transistor T9 in den leitenden Zustand versetzt, wodurch seine Kollektorspannung auf das Nullpotential sinkt und der Transistor T11 gesperrt wird. Dadurch wird die über den Spannungsteiler R71, R72 am Eingangswiderstand R73 anliegende positive Teilspannung am invertierenden Eingang des als Integrator geschalteten Verstärkers 48 wirksam, und der Integrationskondensator C7 wird langsam auf eine negative Spannung aufgeladen. Die Ausgangsspannung des Integrators 48 wird über den Eingangswiderstand R77 dem nicht invertierenden Eingang des als Spannungskomparator geschalteten Verstärkers 49 zugeleitet. Der invertierende Eingang des Spannungskomparators, erhält über den Spannungsteiler R75, R76 und über dessen Eingangswiderstand R78 eine negative Spannung. Überschreitet nun nach einer definierten Zeit die Ausgangsspannung des Integrators die Teilspannung des Spannungsteilers R75, R76, so schaltet der Spannungskomparator auf eine negative Ausgangsspannung um und sperrt den Transistor T12. Dadurch steigt die Kollektorspannung des Transistors T12 auf eine fixe positive Spannung, wodurch über die Diode D14 und den Widerstand R81 der Transistor T13 in den leitenden Zustand versetzt wird. Der Transistor T13 schaltet das Relais 34 ein. Über den Relaiskontakt x (Fig. 2e) wird der Antriebsmotor 36 in Bewegung gesetzt und das Kippdach in einen größeren Öffnungswinkel gefahren.

Das Kippdach wird so lange in einen größeren Öffnungswinkel gefahren, bis die Ausgangsspannung des Potentiometers 26 die Ausgangsspannung des Verstärkers 27 auf einen solchen Spannungswert zurückführt, der ein Umschalten der Kippstufe 28 auf das Nullpotential herbeiführt. Am Trimmpotentiometer P18 kann die wirksame Totzone der Kippstufe vergrößert bzw. verkleinert werden. Sobald am Ausgang der Kippstufe ein Nullpotential besteht, wird der Transistor T9 gesperrt, seine Kollektorspannung steigt auf eine fixe negative Spannung und versetzt dadurch den Transistor T11 in den leitenden Zustand. Dieser schließt den Integrationskondensator C7 kurz und führt somit die Ausgangsspannung des Integrators 48 auf das Nullpotential zurück. Gleichzeitig wird der Spannungskomparator 49 auf eine positive Ausgangsspannung umgeschaltet und der Transistor T12 geöffnet, was ein Sperren des Transistors T13 zur Folge hat. Dieser Transistor schaltet das Relais 34 aus und damit auch den Antriebsmotor. Die Schaltungsglieder 48 bis 51 bilden gemeinsam das mit Bezug auf Fig. 1a beschriebene Einschaltverzögerungsglied 29.

Ist die Spannung am nicht invertierenden Eingang des Verstärkers 27 kleiner als die am invertierenden Eingang, so wird nach dem Überschreiten der Totzone der Ausgang der Kippstufe 28 auf eine positive Spannung geschaltet, der Transistor T7 geöffnet und der Transistor T8 gesperrt. Mit dem Sperren des Transistors T8 beginnt der Integrator 50 zu integrieren. Nach einer definierten Zeit wird der Spannungskomparator 51 umgeschaltet und der Transistor T10 dadurch gesperrt. Über die Diode D24 und den Widerstand R86 wird der Transistor T14 in den leitenden Zustand versetzt. Dieser Schaltet das Relais 35 ein, wodurch der Antriebsmotor 36 über den Relaiskontakt y (Fig. 2e) in Bewegung gesetzt und das Kippdach in einen kleineren Öffnungswinkel gefahren wird. Das Kippdach wird so lange in einen kleineren Öffnungswinkel gefahren, bis die Ausgangsspannung des Potentiometers 26 über den Verstärker 27 die Kippstufe 28 auf das Nullpotential zurückschaltet, und dadurch über die Folgeglieder das Relais 35 ausgeschaltet wird.

Die Endschalter 32 und 33 sind im Kippdachbereich eingebaut. Endschalter 32 wird bei maximalem Öffnungswinkel des Kippdaches und Endschalter 33 bei geschlossenem Kippdach betätigt. Damit wird ein Weiterlaufen des Antriebsmotors 36 verhindert. Mit dem Wippschalter 53 wird der automatische Stadtbetrieb und mit dem Wippschalter 54 der automatische Überlandbetrieb ein- bzw. ausgeschaltet.

Bei Betätigung des Wippschalters 53 für Stadtbetrieb werden über die Dioden D7, D8 die Relais A und D eingeschaltet und über die Dioden D3 und D4 die Arbeitswiderstände R70, R80 der Transistoren T10, T12 mit positiver Spannung versorgt. Der Relaiskontakt 25a schaltet den Ausgang des Summierers 22 auf den Eingang des Verstärkers 27. Der Relaiskontakt a2 schaltet die Selbsthaltung des Relais A ein. Über die Diode D10 kann das Relais C eingeschaltet und somit der Stadtbetrieb ausgeschaltet werden.

Bei Betätigung des Wippschalters 5 für Überlandbetrieb werden über die Dioden D21, D11 die Relais B und C eingeschaltet und über die Dioden D5, D6 die Arbeitswiderstände R70, R80 der Transistoren T10, T12 mit positiver Spannung versorgt. Der Relaiskontakt 25b schaltet den Ausgang des Summierers 24 auf den Eingang des Verstärkers 27. Der Relaiskontakt b2 schaltet die Selbsthaltung des Relais B ein. Über die Diode D22 kann das Relais D eingeschaltet und somit der Überlandbetrieb ausgeschaltet werden. Durch die Dioden D11, D18 wird ein gleichzeitiger Betrieb der Stadt- und Überlandfunktion ausgeschlossen.

Mit dem Wippschalter 52 für nicht automatischen Betrieb kann entweder über die Diode D15 und den Transistor T13 das Relais 34 oder über die Diode D23 und den Transistor T14 das Relais 35 direkt eingeschaltet werden. Mit dem Einschalten des Wippschalters 52 werden über die Dioden D16, D17 und die Dioden D12, D13, die Relais C und D eingeschaltet, wodurch der Automatikbetrieb ausgeschaltet wird.

Der Anschluß 44 ist mit dem Einschaltkontakt des Zündschlosses verbunden. Sobald das Zündschloß eingeschaltet wird, gelangt über die Sicherung 40 und die Schutzdiode 37 die positive Batteriespannung zum Eingang des Spannungsstabilisators 55, zum Frequenz-Strom-Umsetzer 2 und über den Widerstand R85 zur Basis des Transistors T15. Der Transistor T15 wird bei eingeschaltetem Automatikbetrieb in den leitenden Zustand versetzt und seine Kollektorspannung sinkt auf das Nullpotential. Sobald jedoch das Zündschloß ausgeschaltet wird, erfolgt das Sperren des Transistors und über den Widerstand R83 und die Diode D25 gelangt bei eingeschaltetem Automatikbetrieb eine positive Spannung an die Basis des Transistors T14. Dieser wird in den leitenden Zustand versetzt, schaltet dadurch das Relais 35 ein, wodurch das Kippdach zugefahren wird.

Die stabilisierte Ausgangsspannung des Stabilisators 55 wird einerseits den verschiedenen Anschlußpunkten der Schaltung und zum anderen dem Verstärker 56 zugeführt. Der Verstärker 56 erzeugt in Verbindung mit den angeschlossenen Transistoren T16, T17 das virtuelle Nullpotential und die zur Versorgung der Verstärker 47, 9 bis 14, 22, 24, 27, 28, 29 notwendig positive und negative Betriebsspannung.

Über den Anschluß 46, die Sicherung 39 und die Schutzdiode 38 werden die Relais A bis D und 34, 35 mit der positiven Batteriespannung versorgt. Der Anschluß 45 wird mit dem negativen Pol der Batterie verbunden. Der Anschluß des Antriebsmotors 36 erfolgt über die Anschlußklemme 57 und 58. Die Anschlußklemmen 42 und 43 werden mit der Batterie direkt verbunden. Die Sicherung 41 dient zur Absicherung des Motorstromkreises. Die Kondensatoren C10 bis C13 in Verbindung mit den Widerständen R91 und R92 dienen zur Kontaktschutzbeschaltung der Relaiskontakte x bzw. y.

Von den erwähnten elektronischen bzw. elektrischen Bauteilen bilden die Dioden 3 bis 8, 10 bis 13, 15 bis 18, 21, 22, 23, 25, die Relais A bis D, die Relaiskontakte a2, b2, die Transistoren T13 bis T17, der Spannungsstabilisator 55, der Widerstand R83 und der Verstärker 56 gemeinsam die mit Bezug auf Fig. 1a, 1b erläuterte Funktionseinheit 30.

Das in den Fig. 3a bis 3l wiedergegebene vollständige Flußschaltbild verdeutlicht die Funktion der erfindungsgemäßen Anordnung in allen Betriebszuständen. Hierbei wurde stets von einem Kippdach, d. h. einem Kraftfahrzeugdach, in dessen Dachausschnitt ein kippbar gelagerter Deckel angeordnet ist, ausgegangen. Selbstverständlich gilt das Funktionsschaltbild prinzipiell auch für jede andere am Kraftfahrzeug befindliche Belüftungseinrichtung, beispielsweise für zu öffnende Fensterscheiben. Die im Flußschaltbild verwendete Bezeichnung »Handbetrieb« bezieht sich auf den Betriebszustand, der nach Betätigung des Wippschalters 52 gegeben ist. Im übrigen ist das Flußschaltbild aus sich selbst heraus verständlich und bedarf keiner näheren Erläuterung.

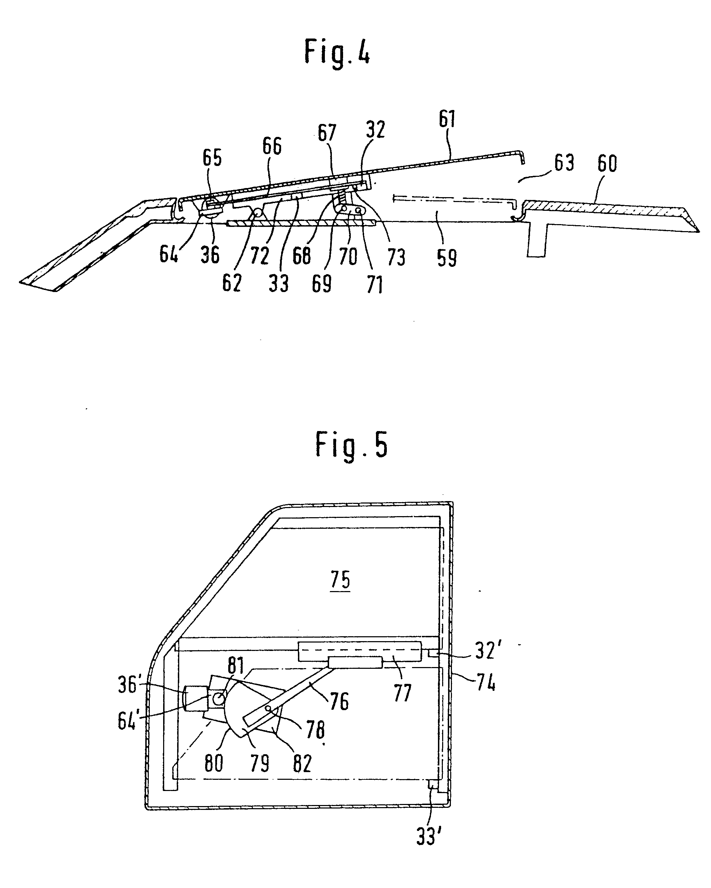

Aus den Fig. 4 und 5 gehen Kraftfahrzeugbelüftungseinrichtungen hervor, für welche die erfindungsgemäße Anordnung zum Einsatz gelangen kann. In Fig. 4 ist eine Dachbelüftungseinrichtung dargestellt, bei welcher in dem Ausschnitt 59 eines Kraftfahrzeugdaches 60 ein Kippdeckel 61 über eine Gelenkachse 62 schwenkbar gelagert ist. Der Kippdeckel 61 ist mit ausgezogenen Lagen in seiner maximalen Öffnungsstellung gezeigt, bei welcher an seinem hinteren Ende ein Lüftungsspalt 63, welcher mit dem Fahrzeuginnenraum in Verbindung steht, gebildet ist. Die abgebrochen dargestellte strichpunktierte Linienführung veranschaulicht die Lage des Kippdeckels 61 im geschlossenen Zustand.

In der Nähe seines vorderen Endes trägt der Kippdeckel 61 auf seiner Unterseite den mit einem Untersetzungsgetriebe 64 ausgerüsteten Motor 36. In einem an das Getriebe 64 angeflanschten Antriebsgehäuse 65 steht ein angetriebenes Zahnritzel od. dgl. mit einer längsverschieblich gelagerten Zahnstange 66 od. dgl. im Antriebseingriff. Die Zahnstange 66 ist durch ein Abtriebsgehäuse 67 hindurchgeführt, in welchem sie ein mit einer Gewindespindel 68 fest verbundenes (nicht dargestelltes) Zahnrad antreibt. Die Gewindespindel ist mit ihrem äußeren Ende bei 69 an eine Schwenklasche 70 angelenkt, die ihrerseits bei 71 mit dem festen Bereich des Fahrzeugdaches in Gelenkverbindung steht. Längsverschiebungen der Zahnstange 66, die durch den Motor 36 und das nachgeschaltete Getriebe bewirkt werden, führen zu einem Einfahren bzw. Ausfahren der Gewindespindel 68, wodurch der Kippwinkel des Deckels 61 veränderbar ist.

An einem am Kippdeckel 61 befestigten Längsträger 72 befinden sich die den beiden Deckelgrenzlagen zugeordneten Endschalter 32 und 33. Die Endschalter 32 und 33 werden durch einen an der Zahnstange 66 befestigten Betätigungsfortsatz 73 geschaltet.

Aus Fig. 5 ist eine Kraftfahrzeugtür 74 ersichtlich, an welcher ein in den Fensterschacht der Tür 74 versenkbares Schiebefenster 75 geführt ist. Die Hubbewegungen des Fensters 75 besorgt ein Armfensterheber, dessen Hebearm 76 mit einem (nicht dargestellten) Schubgelenk an eine an der Fensterscheibe 75 befestigte Hebeschiene 77 angreift. Der Hebearm 76 ist bei 78 schwenkbar gelagert und steht mit einem um dieselbe Schwenkachse bewegbaren Zahnradsektor 79 in fester Verbindung. Die Verzahnung 80 (nicht dargestellt) des Zahnsektors 79 kämmt mit einem Antriebsritzel 81, das von dem Motor 36' über ein daran angeschlossenes Getriebe 64' angetrieben wird. Die beschriebene Fensterheberanordnung ist mittels einer Montageplatte 82 am Türblech befestigt.

Die Fensterscheibe 75 ist in ausgezogenen Linien nahe ihrer Schließposition dargestellt. Ihre volle Öffnungslage ergibt sich aus der strichpunktierten Darstellung. Bei Einschaltung des Motors treibt das Ritzel 81 je nach Motordrehrichtung den Zahnsektor 79, wodurch der Hebearm 76 entweder im Uhrzeigersinn oder im Gegenuhrzeigersinn verschwenkt was zu einer Schließverschiebung bzw. Öffnungsverschiebung des Fensters führt. In seinen beiden Grenzlagen betätigt das Fenster wiederum Endschalter 32' bzw. 33'.

Die unter Bezugnahme auf die Fig. 4 und 5 kurz beschriebenen Kraftfahrzeugbelüftungseinrichtungen sind im wesentlichen herkömmlich aufgebaut und bedürfen daher keiner näheren Erläuterung, zumal sie nicht Gegenstand der vorliegenden Erfindung sind. Die erläuterten Konstruktionen stellen selbstverständlich nur Ausführungsbeispiele dar. Die erfindungsgemäße Anordnung kann mit beliebigen Kraftfahrzeugbelüftungseinrichtungen kombiniert werden, an welchen Stellbewegungen durchzuführen sind.

**Patentansprüche**

1. Anordnung zur Erzeugung von Stellbewegungen an durch Elektromotor (36) angetriebenen Kraftfahrzeugbelüftungseinrichtungen, insbesondere an durch Deckel (61) verschließbare Dachöffnungen (59), wobei mit einem sich im Fahrbetrieb drehenden Kraftfahrzeugteil (1a), dessen Drehzahl der Fahrgeschwindigkeit direkt proportional ist, ein Generator (1b) gekuppelt ist, von dem ein Steuersignal abgeleitet wird, mit dessen Hilfe der Stellantrieb (36) für die Belüftungseinrichtung (61) nach Maßgabe der Fahrgeschwindigkeit, bei höherer Geschwindigkeit in Schließrichtung und bei niedrigerer Geschwindigkeit in Öffnungsrichtung der Belüftungseinrichtung (61), verstellbar ist, dadurch gekennzeichnet, daß das Kraftfahrzeugteil eine Tachometerwelle (1a) ist, mit welcher der als Impulsgenerator ausgebildete Generator (1b) in Antriebsverbindung steht, dem ein Frequenz-Gleichstrom-Umsetzer (2) zur Erzeugung eines der Impulsfolge proportionalen Gleichstromes nachgeschaltet ist, welcher in einem nachfolgenden Widerstand (R4) eine dem Gleichstrom proportionale Steuerspannung erzeugt, die einer Mehrzahl von parallel geschalteten auf unterschiedliche Umschaltschwellenwerte für die Steuerspannung eingestellten und als Spannungskomparatoren geschalteten Verstärkern (9 bis 14) zugeführt wird, welche bei Umschaltung jeweils ein fixes Spannungssignal einem den Verstärkern (9 bis 14) nachgeschalteten, an eine Versorgungsspannung angeschlossenen Summierverstärker (22) zuführen, dessen Ausgangsspannungssignal einem Vergleicher (27) aufgeschaltet ist, der mit einem von den Stellbewegungen der Belüftungseinrichtung (61) mechanisch verstellbaren Potentiometer (26) verbunden ist und dessen Ausgangssignal einem elektronischen Schalter (28) mit Dreipunktverhalten aufgeschaltet ist, welcher durch ein positives oder negatives Spannungssignal des Vergleichers (27) nach Überschreiten einer Totzone eingeschaltet wird und ein Einschaltzeitverzögerungsglied (29) ansteuert, das an seinem Ablaufende ein Signal liefert, das dem Stellantrieb (36) aufgeschaltet ist, daß zwei parallel geschaltete Gruppen von als Spannungskomparatoren geschalteten Verstärkern (9 bis 11; 12 bis 14) vorgesehen sind, wobei der einen Gruppe (9 bis 11) Umschaltschwellenwerte für den Stadtbetrieb und der anderen Gruppe (12 bis 14) Umschaltschwellenwerte für den Überlandbetrieb zugeordnet sind, daß zwei parallel geschaltete Summierverstärker (22, 24) vorhanden sind, die jeweils mit den Verstärkern einer Gruppe verbunden sind, und daß beide Summierverstärker an einem wahlweise zu betätigenden Umschalter (25) angeschlossen sind, der dem Vergleicher (27) vorgeschaltet ist.

2. Anordnung nach Anspruch 1, dadurch gekennzeichnet, daß die Verstärker (9 bis 14) jeweils mit einem als Spannungsteiler geschalteten und an eine stabilisierte Versorgungsspannung angeschlossenen Trimmpotentiometer (3 bis 8) für die Einstellung der Umschaltschwellenwerte verbunden sind.

3. Anordnung nach Anspruch 1 oder 2, dadurch gekennzeichnet, daß an den Ausgang eines jeden Verstärkers (9 bis 14) ein Trimmpotentiometer (20 bis 15) für die Einstellung der Stellweglängen bzw. Schwenkwinkelgrößen angeschlossen ist.

4. Anordnung nach einem der Ansprüche 1 bis 3, dadurch gekennzeichnet, daß die Versorgungsspannung einem Eingang der Summierverstärker (22, 24) über ein als Spannungsteiler geschaltetes Trimmpotentiometer (21, 23) für die Einstellung der maximalen Belüftungsöffnungsgröße zugeführt ist.

## Claims

1. Assembly for generating adjustment movement on automobile ventilation devices driven by electric motor (36), especially on roof openings (59) closable by a lid (61), wherein a generator (1b) is coupled to a component (1a) of the automobile which revolves during travelling and the rotational speed of which is directly proportional to the speed of travel, from which generator a control signal is derived, by means of which the adjustment drive (36) for the ventilation device (61) is adjustable according to the speed of travel, in the direction of closing the ventilation device (61) at a higher speed and in the direction of opening at a lower speed, characterized in that the component of the automobile is a tachometer shaft (1a), with which the generator, constructed as a pulse generator (1b), is drivingly connected, with which pulse generator a frequency-direct current converter (2) for generating a direct current proportional to the pulse sequence is connected, which direct current generates in a subsequent registor (R4) a control voltage proportional to the direct current, which voltage is supplied to a plurality of amplifiers (9 to 14), connected in parallel and set to different switch-over threshold values for the control voltage and connected as voltage comparators, which, when switched over, each supply a fixed voltage signal to a summating amplifier (22) connected after the amplifiers (9 to 14) and connected to a supply voltace, the output voltage signal of which summating amplifier is applied to a comparator (27), which is connected to a potentiometer (26) mechanically adjustable by the adjustment movements of the ventilation device (61) and the output signal from which comparator is applied to an electronic switch (28) with three-point action, which is switched on by a positive or negative voltage signal of the comparator (27) after passing through a dead zone and governs a make time delay element (29), which delivers at the end of its delay period a signal which is applied to the adjustment drive (36), that two parallel connected groups of amplifiers (9 to 11; 12 to 14) connected as voltage comparators are provided, to the one group (9 to 11) of which switchover threshold values for town driving and to the other group (12 to 14) of which switch-over threshold values for country driving are associated, that two summating amplifiers (22, 24) connected in parallel are provided, each of which is connected to the amplifiers of one group, and that the two summating amplifiers are connected to a change-over switch (25) which can be operated as desired, and which is connected ahead of the comparator (27).

2. Assembly according to claim 1, characterized in that the amplifiers (9 to 14) are each connected to a trim potentiometer (3 to 8), connected as a voltage divider and connected to a stabilized supply voltage, for the purpose of adjusting the switch-over threshold values.

3. Assembly according to claim 1 or 2, characterized in that a trim potentiometer (20 to 15) for the setting of the adjustment distances or pivot angle values is connected to the output of each amplifier (9 to 14).

4. Assembly according to one of claims 1 to 3, characterized in that the supply voltage is supplied to one input of the summating amplifiers (22, 24) via a trim potentiometer (21, 23) connected as a voltage divider for the purpose of setting the maximum ventilation opening value.

## Revendications

1. Montage pour la production de mouvement de positionnement de dispositifs d'aération de véhicule entraînés par moteur électrique (36), et notamment sur des ouvertures de toit (59) obturables par un couvercle (61), dans lequel un générateur (1b) est accouplé à une pièce (1a) du véhicule tournant à une vitesse proportionelle à la vitesse de marche, et délivre un signal de commande permettant d'actionner le servomoteur (36) du dispositif d'aération (61) en fonction de la vitesse de marche, dans le sens de fermeture du dispositif d'aération (61) à vitesse élevée et dans le sens d'ouverture à faible vitesse, caractérisé en ce que la pièce du véhicule est l'arbre ou flexible (1a) du compteur, qui entraîne le générateur, lequel est constitué par un générateur d'impulsions (1b) qui est branché, pour la production d'un courant continu proportionnel au train d'impulsions, en amont d'un convertisseur fréquence-courant continu (2) délivrant aux bornes d'une résistance en aval (R4) une tension de commande proportionelle au courant continu et appliquée à plusieurs amplificateurs (9 à 14) couplés en parallèle, branchés en comparateurs de tension, ajustés à des seuils différents de commutation de la tension de commande et délivrant, lors de la commutation, un signal en tension fixe à un amplificateur sommateur (22), branché en aval des amplificateurs (9 à 14), relié à une tension d'alimentation et dont le signal de sortie en tension est appliqué à un comparateur (27), auquel est relié un potentiomètre (26) réglable mécaniquement par les mouvements de positionnement du dispositif d'aération (61) et dont le signal de sortie est appliqué à un interrupteur électronique (28) à trois niveaux, qui est branché par un signal en tension positif ou négatif du comparateur (27), après franchissement d'une zone morte, et commande élément de retard au branchement (29) qui délivre à la fin de son temps de retard un signal appliqué au servomoteur (36), deux groupes d'amplificateurs (9 à 11; 12 à 14) branchés en comparateurs de tension et couplés en parallèle sont prévus, des seuils de commutation pour la circulation urbaine étant affectés à un groupe (9 à 11 et des seuils de commutation pour la circulation routière étant affectés au second groupe (12 à 14), deux amplificateurs sommateurs (22, 24) couplés en parallèle sont reliés chacun aux amplificateurs d'un groupe et les deux amplificateurs sommateurs sont reliés à un inverseur (25) actionné à la demande et branché en amont du comparateur (27).

2. Montage selon la revendication 1, caractérisé en ce que les amplificateurs (9 à 14) sont reliés chacun, pour l'ajustement des seuils de commutation, à un potentiomètre d'équilibrage (3 à 8), branché en diviseur de tension et relié à une tension d'alimentation stabilisée.

3. Montage selon la revendication 1 ou 2, caractérisé par un potentiomètre d'équilibrage (20 à 15) relié à la sortie de chaque amplificateur (9 à 14) pour l'ajustement des courses de positionnement ou des angles de pivotement.

4. Montage selon une quelconque des revendications 1 à 3, caractérisé par l'application de la tension d'alimentation à une entrée du ou des amplificateurs sommateurs (22, 24), par l'intermédiaire d'un potentiomètre d'équilibrage (21, 23) branché en diviseur de tension, pour l'ajustement de la taille maximale de l'ouverture d'aération.

Fig.1a

0 004 970

Fig.1b

Fig.2a

Fig. 2b

Fig.2c

Fig. 2d

0 004 970

Fig. 2e

Fig. 3a

0 004 970

nein

ja — Auto im Stillstand?

ja — Handbetrieb eingeschaltet? — nein

Kippdach kann in einen ge-wünschten Öffnungswinkel gefahren werden

nein — Kippdach geöffnet? — ja

Automatischer Stadt-od. Auto-bahnbetrieb eingeschaltet? — nein

Kippdach bleibt in seiner Stellung stehen

ja

Zündschloss-kontakt ein-geschaltet? — ja

1

2

3 | nein

4

Fig.3b

Kippdach fährt
zeitverzögert in
Schließstellung

Kippdach fährt
zeitverzögert in
seinen maximalen
Öffnungswinkel

Automatischer
Stadt-od. Autobahnbetrieb
eingeschaltet?

ja

nein

Kippdach bleibt
geschlossen

Zündschlosskontakt eingeschaltet?

ja

nein

Kippdach bleibt
geschlossen

Kippdach fährt
zeitverzögert
in seinen
maximalen
Öffnungswinkel

Fig. 3c

- 5
- Handbetrieb eingeschaltet? — ja → Kippdach kann in einen gewünschten Öffnungswinkel gefahren werden
- nein
- Steigt oder fällt die Fahrgeschwindigkeit des Autos?
- steigt
- fällt
- Automatischer Autobahnbetrieb eingeschaltet? — nein →
- ja
- Automatischer Stadtbetrieb eingeschaltet? — nein → Kippdach bleibt geschlossen
- ja
- 6
- 7
- 8

0 004 970

31

## Fig.3d

→ 8

Erster Einschaltpunkt für
die Kippdachbewegung
erreicht und
überschritten?

nein →

Kippdach fährt zeitverzögertin seinen maximalen
Öffnungswinkel A

ja

Kippdach fährt zeitverzögert
in Öffnungswinkel B
B < A

Zweiter Einschaltpunkt für die
Kippdachbewegung
erreicht und über-
schritten?

nein →

Kippdach bleibt in
Stellung B

11 | ja

0 004 970

**Fig. 3e**

```
                          11│
          ┌──────────────────────────────┐
          │  Kippdach fährt zeitverzögert │
          │  in Öffnungswinkel C          │
          │        C < B                  │
          └──────────────────────────────┘
                          │
                          ▼
```

$$C < B$$

Dritter Einschalt-punkt für die Kipp-dachbewegung er-reicht und über-schritten?

nein → Kippdach bleibt in Stellung C

ja

Kippdach fährt zeitverzögert in Öffnungswinkel D

$$D < C$$

Fig. 3f

**Erster Einschalt-punkt für die Kipp-dachbewegung er-reicht und über-schritten?**

nein → **Kippdach fährt zeitverzögert in seinen maximalen Öffnungswinkel A**

ja ↓

**Kippdach fährt zeitverzögert in Öffnungswinkel U**
**U < A**

↓

**Zweiter Einschalt-punkt für die Kipp-dachbewegung er-reicht und über-schritten?**

nein → **Kippdach bleibt in Stellung U**

ja

0 004 970

Fig.3g

Kippdach fährt zeitverzögert in Öffnungswinkel V
$V < U$

Dritter Einschalt-punkt für die Kippdachbewegung erreicht und über-schritten?

nein

Kippdach bleibt in Stellung V

ja

Kippdach fährt zeitverzögert in Öffnungswinkel W
$W < V$

0 004 970

Fig. 3h

16

**Automatischer Autobahnbetrieb eingeschaltet?**

nein

ja

17

**Automatischer Stadtbetrieb eingeschaltet?**

nein → **Kippdach bleibt geschlossen**

ja

**Dritter Einschaltpunkt für die Kippdachbewegung erreicht und unterschritten?**

nein → **Kippdach bleibt in Stellung D**

ja

18

0 004 970

41

**Fig. 3i**

```
18 │
   ▼
┌─────────────────────────────┐
│ Kippdach fährt zeitverzögert│
│ in Öffnungswinkel C         │
│           C > D             │
└─────────────────────────────┘
              │
              ▼
          ╱───────╲
        ╱  Zweiter Einschalt- ╲        ┌──────────────────┐
      ╱   punkt für die Kipp-   ╲ nein │ Kippdach bleibt in│
      ╲   dachbewegung er-      ╱────▶ │ Stellung C        │
        ╲  reicht und unter-  ╱        └──────────────────┘
          ╲  schritten?    ╱
            ╲───────────╱
                  │ ja
                  ▼
┌─────────────────────────────┐
│ Kippdach fährt zeitverzögert│
│ in Öffnungswinkel B         │
│           B > C             │
└─────────────────────────────┘
              │
             20
```

Fig. 3j

Erster Einschalt-
punkt für die Kippdachbewegung erreicht und unterschritten?

nein → Kippdach bleibt
in Stellung B

ja

Kippdach fährt zeitverzögert in
seinen maximalen Öffnungswinkel A

$A > B$

Dritter Einschalt-
punkt für die Kippdachbewegung erreicht und unterschritten?

nein → Kippdach bleibt
in Stellung W

ja

0 004 970

Fig. 3k

21

```
┌─────────────────────────┐
│ Kippdach fährt zeitverzögert │
│ in Öffnungswinkel V     │
│         V > W           │
└─────────────────────────┘
```

```
        Zweiter Einschalt-
        punkt für die Kipp-
        dachbewegung er-          nein     ┌──────────────────────┐
        reicht und unter-    ──────────────▶│ Kippdach bleibt in   │
        schritten?                          │ Stellung V           │
                                            └──────────────────────┘
```

ja

```
┌─────────────────────────┐
│ Kippdach fährt zeitverzögert │
│ in Öffnungswinkel U     │
│         U > V           │
└─────────────────────────┘
```

22

22

# Fig. 3l

Erster Einschalt-
punkt für die Kippdachbewegung erreicht und unterschritten?

nein → Kippdach bleibt in Stellung U

ja

Kippdach fährt zeitverzögert in seinen
maximalen Öffnungswinkel A

A > U

## Fig.4

## Fig.5